(19) Europäisches Patentamt

European Patent Office

Office européen des brevets

(11) **EP 1 897 395 B1**

(12) **EUROPEAN PATENT SPECIFICATION**

(45) Date of publication and mention of the grant of the patent:
**18.10.2017 Bulletin 2017/42**

(21) Application number: **06771790.0**

(22) Date of filing: **31.05.2006**

(51) Int Cl.:
*H04L 1/18* (2006.01)          *H04L 1/16* (2006.01)
*H04L 5/00* (2006.01)          *H04L 27/26* (2006.01)

(86) International application number:
**PCT/US2006/021211**

(87) International publication number:
**WO 2006/130742 (07.12.2006 Gazette 2006/49)**

(54) **ASSIGNMENT ACKNOWLEDGEMENT FOR A WIRELESS COMMUNICATION SYSTEM**

ZUWEISUNGSBESTÄTIGUNG FÜR EIN DRAHTLOSES KOMMUNIKATIONSSYSTEM

RECONNAISSANCE D'ASSIGNATION POUR SYSTEME DE COMMUNICATION SANS FIL

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.05.2005 US 142121**
**27.10.2005 US 260931**
**07.03.2006 US 370638**

(43) Date of publication of application:
**12.03.2008 Bulletin 2008/11**

(73) Proprietor: **QUALCOMM INCORPORATED**
**San Diego, CA 92121 (US)**

(72) Inventors:
• **AGRAWAL, Avneesh**
**San Diego, California 92127 (US)**
• **KHANDEKAR, Aamod**
**San Diego, California 92122 (US)**
• **GOROKHOV, Alexei**
**San Diego, California 92130 (US)**

(74) Representative: **Tomkins & Co**
**5 Dartmouth Road**
**Dublin 6 (IE)**

(56) References cited:
**WO-A-2005/015941          WO-A1-2004/015912**
**KR-A- 20050 043 302          US-A1- 2002 101 839**
**US-A1- 2005 030 964**

• **JOHN B. GROE, LAWRENCE E. LARSON: "CDMA Mobile Radio design" 26 September 2001 (2001-09-26), ARTECH HOUSE , NORWOOD, MA02062 580530 , XP002397967 pages 257-259**

## Description

### BACKGROUND

#### I. Field

The following description relates generally to wireless communications and, amongst other things, to dynamically managing network resources in wireless communication systems.

#### II. Background

Wireless communication systems are widely deployed to provide various communication services such as voice, packet data, broadcast, messaging, and so on. These systems may be multiple-access systems capable of supporting communication for multiple users by sharing the available system resources. Examples of such multiple-access systems include code division multiple access (CDMA) systems, time division multiple access (TDMA) systems, and frequency division multiple access (FDMA) systems.

Multiple-access communication systems typically employ methods of assigning system resources to the individual users of the system. When such assignments change rapidly over time, system overhead required just to manage the assignments can become a significant portion of the overall system capacity. When assignments are sent using messages that constrain the assignment of resource blocks to a subset of the total possible permutations of blocks, assignment expense can be reduced somewhat, but by definition, assignments are constrained. Further, in a system where assignments are "sticky" (*e.g.,* an assignment persists over time rather than having a deterministic expiration time), to determine whether the assignments have been properly decoded. The patent application published with the publication number WO2005/015941 addresses the need in the art for efficient management of grant, acknowledgement, and rate control channels. A list associated with a first station is generated or stored, the list comprising zero or more identifiers, each identifier identifying one of a plurality of second stations for sending a message to the first station. The messages may be acknowledgements, rate control commands, or grants.

In view of at least the above, there exists a need in the art for a system and/or methodology of improving assignment notification and/or updates and reducing overhead in wireless network systems.

### BRIEF DESCRIPTION OF THE DRAWINGS

The features and nature of the present invention will become more apparent from the detailed description set forth below when taken in conjunction with the drawings in which like reference characters identify correspondingly throughout.

FIG. 1 shows a wireless communication system.
FIG. 2 illustrates H-ARQ transmission on the forward link.
FIGS. 3A and 3B show two subcarrier structures.
FIG. 4 shows a frequency-hopping scheme.
FIGS. 5A and 5B show two signaling transmission schemes for an ACK channel.
FIG. 6 shows puncturing of a time-frequency block for the ACK channel.
FIG. 7A shows an ACK segment with multiple clusters.
FIG. 7B shows a time-frequency block not punctured by an ACK segment.
FIG. 7C shows a time-frequency block punctured by an ACK segment.
FIG. 8 shows transmission of an ACK message to achieve diversity.
FIG. 9 shows a binary channel tree.
FIG. 10 shows a process for acknowledging transmissions on a reverse link by a terminal.
FIG. 11 shows an apparatus for acknowledging transmissions on a reverse link by a terminal.
FIG. 12 shows a process for determining a message that is being acknowledged on a reverse link channel.
FIG. 13 shows an apparatus for determining a message that is being acknowledged on a reverse link channel.
FIG. 14 shows a block diagram of a base station and a terminal.
FIG. 15 shows a block diagram of a transmit data and signaling processor.
FIG. 16 shows a block diagram of a receive data and signaling processor.

### DETAILED DESCRIPTION

The word "exemplary" is used herein to mean "serving as an example, instance, or illustration." Any embodiment or design described herein as "exemplary" is not necessarily to be construed as preferred or advantageous over other embodiments or designs.

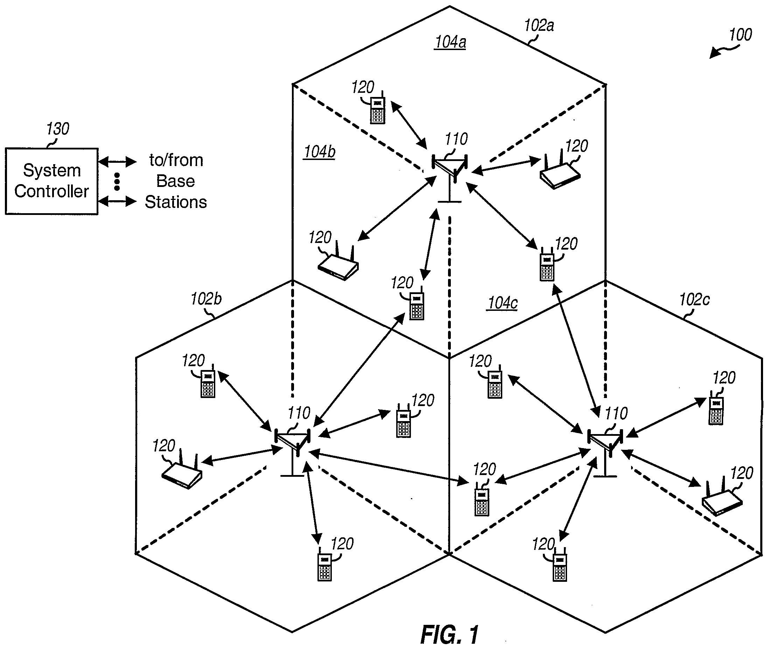

**FIG. 1** shows a wireless communication system 100 with multiple base stations 110 and multiple terminals 120. A base station is a station that communicates with the terminals. A base station may also be called, and may contain some or all of the functionality of, an access point, a Node B, and/or some other network entity. Each base station 110 provides communication coverage for a particular geographic area 102. The term "cell" can refer to a base station and/or its coverage area depending on the context in which the term is used. To improve system capacity, a base station coverage area may be partitioned into multiple smaller areas, e.g., three smaller areas 104a, 104b, and 104c. Each smaller area is served by a respective base transceiver subsystem (BTS). The term "sector" can refer to a BTS and/or its coverage area depending on the context in which the term is used. For a sectorized cell, the BTSs for all sectors of that cell are typically co-located within the base station for the cell. The signaling transmission techniques described herein may be used for a system with sectorized cells as well as a system with un-sectorized cells. For simplicity, in the following description, the term "base station" is used generically for a station that serves a sector as well as a station that serves a cell.

Terminals 120 are typically dispersed throughout the system, and each terminal may be fixed or mobile. A terminal may also be called, and may contain some or all of the functionality of, a mobile station, a user equipment, and/or some other device. A terminal may be a wireless device, a cellular phone, a personal digital assistant (PDA), a wireless modem card, and so on. A terminal may communicate with zero, one, or multiple base stations on the forward and reverse links at any given moment.

For a centralized architecture, a system controller 130 couples to base stations 110 and provides coordination and control for these base stations. System controller 130 may be a single network entity or a collection of network entities. For a distributed architecture, the base stations may communicate with one another as needed.

The signaling transmission techniques described herein may be used to send various types of signaling such as ACK information, power control commands, channel quality indicators (CQIs), requests for system resources, access probes, feedback information, and so on. These techniques may be used for the forward link as well as the reverse link. For clarity, these techniques are described below for sending ACK information on the reverse link.

Certain aspects of system allow efficient allocation of resources ACKs of assignment messages transmitted from base stations 110. Assignment messages my be acknowledged in order to increase assignment reliability and to improve scheduling, in order to reduce lost or not decoded packets. Further, by acknowledging assignments, the number of assignments to be transmitted may be reduced and therefore the power budget available for forward link transmission increased.

In such cases, certain logical resources allocated for reverse link transmission are utilized for assignment, which may be supplemental, decremental, forward link, reverse link, or the like, ACKs while others are used for sending data ACKs. However, if a logical resource has only one ACK channel, or an assignment for a given terminal has only one ACK channel then all ACKs are related to data only. That way, if multiple reverse link ACK channels are available both data and assignment messages may be acknowledged. However, if only one or other number of system limited ACK channels are available, then only data messages are acknowledged.

Further, in certain aspects, if both a data packet and assignment are being acknowledged for a single frame, or part of a frame, the ACK may be transmitted only for the data packet(s) and not for the assignment. This may be performed in cases where there are link budget or other power limitations.

System 100 may employ hybrid automatic repeat request (H-ARQ) transmission, which is also called incremental redundancy (IR) transmission. With H-ARQ, a transmitter sends one or more transmissions for a data packet until the packet is decoded correctly by a receiver or the maximum number of transmissions has been sent. H-ARQ improves reliability for data transmission and supports rate adaptation for packets in the presence of changes in channel conditions.

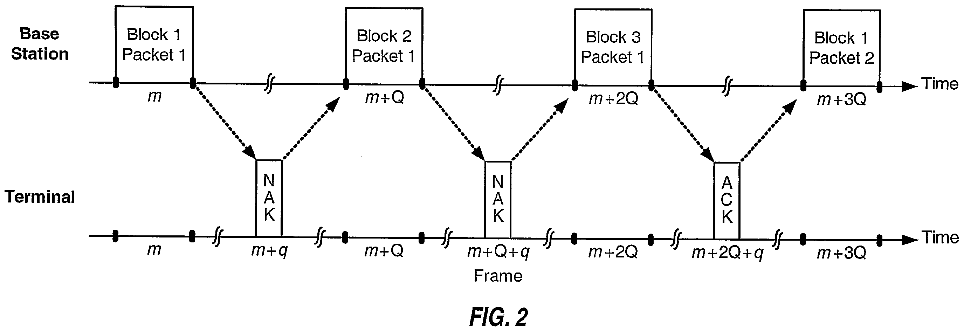

**FIG. 2** illustrates H-ARQ transmission on the forward link. A base station processes (e.g., encodes and modulates) a data packet (Packet 1) and generates multiple (V) data blocks, where V > 1. A data packet may also be called a codeword and so on. A data block may also be called a subpacket, an H-ARQ transmission, and so on. Each data block for the packet may contain sufficient information to allow a terminal to correctly decode the packet under favorable channel conditions. The V data blocks typically contain different redundancy information for the packet. Each data block may be sent in a frame, which may be of any time duration. The V data blocks are sent one at a time until the packet is terminated, and the block transmissions are spaced apart by Q frames, where Q > 1.

The base station transmits the first data block (Block 1) for Packet 1 in frame $m$. The terminal receives and processes (e.g., demodulates and decodes) Block 1, determines that Packet 1 is decoded in error, and sends a NAK to the base station in frame $m + q$, where $q$ is the ACK/NAK delay and $1 \leq q < Q$. The base station receives the NAK and transmits the second data block (Block 2) for Packet 1 in frame $m + Q$. The terminal receives Block 2, processes Blocks 1 and 2, determines that Packet 1 is decoded in error, and sends back a NAK in frame $m + Q + q$. The block transmission and NAK response may continue up to V times. For the example shown in FIG. 2, the base station transmits data block 3 (Block 3) for Packet 1 in frame $m + 2Q$. The terminal receives Block 3, processes Blocks 1 through 3 for Packet 1, determines that the packet is decoded correctly, and sends back an ACK in frame $m + 2Q + q$. The base station receives the ACK and terminates the transmission of Packet 1. The base station processes the next data packet (Packet 2) and transmits the data blocks for Packet 2 in similar manner.

In FIG. 2, a new data block is sent every Q frames. To improve channel utilization, the base station may transmit up to Q packets in an interlaced manner. In an embodiment, a first interlace is formed with frames $m, m + Q$, and so on, a second interlace is formed with frames $m + 1, m + Q + 1$, and so on, and a Q-th interlace is formed with frames $m + Q - 1, m + 2Q - 1$, and so on. The Q interlaces are offset from one another by one frame. The base station may transmit up to Q packets on the Q interlaces. For example, if Q = 2, then the first interlace may include odd-numbered frames, and the second interlace may include even-numbered frames. As another example, if Q = 6, then six interlaces may be formed and used to send six packets in an interlaced manner. In general, the H-ARQ retransmission delay Q and the ACK/NAK delay $q$ are typically selected to provide sufficient processing time for both the transmitter and receiver.

For clarity, FIG. 2 shows transmission of both NAKs and ACKs. For an ACK-based scheme, which is assumed for the description below, an ACK is sent if a packet is decoded correctly, and NAKs are not sent and are presumed by the absence of ACKs.

The signaling transmission techniques described herein may be used for various wireless communication systems such as a CDMA system, a TDMA system, an FDMA system, an orthogonal frequency division multiple access (OFDMA) system, a single-carrier frequency division multiple access (SC-FDMA) system, and so on. An OFDMA system utilizes orthogonal frequency division multiplexing (OFDM), which is a modulation technique that partitions the overall system bandwidth into multiple (K) orthogonal subcarriers. These subcarriers are also called tones, bins, and so on. With OFDM, each subcarrier that may be independently modulated with data. An SC-FDMA system may utilize interleaved FDMA (IFDMA) to transmit on subcarriers that are distributed across the system bandwidth, localized FDMA (LFDMA) to transmit on a block of adjacent subcarriers, or enhanced FDMA (EFDMA) to transmit on multiple blocks of adjacent subcarriers. In general, modulation symbols are sent in the frequency domain with OFDM and in the time domain with SC-FDMA.

The signaling transmission techniques may also be used with various subcarrier structures. For simplicity, the following description assumes that the K total subcarriers are usable for transmission and are given indices of 1 through K.

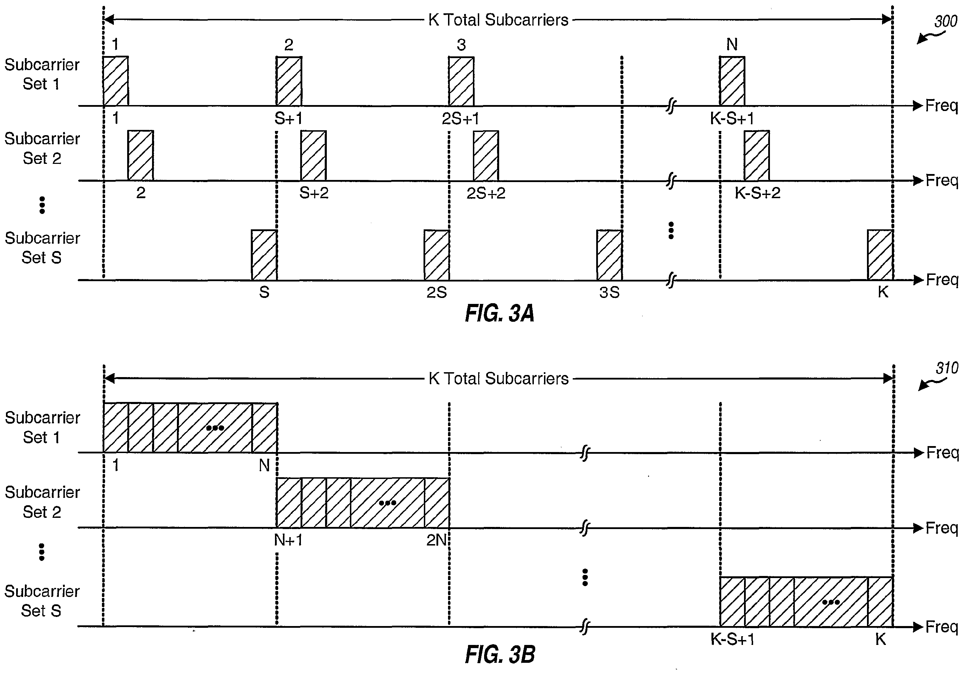

**FIG. 3A** shows a distributed subcarrier structure 300. For subcarrier structure 300, the K total subcarriers are arranged into S non-overlapping sets such that each set contains N subcarriers that are uniformly distributed across the K total subcarriers. Consecutive subcarriers in each set are spaced apart by S subcarriers, where K=S·N. Hence, set $s$ contains subcarriers $s$, S+$s$, 2S+$s$, ..., (N-1)·S+$s$, for $s \in \{1,...,S\}$.

**FIG. 3B** shows a block subcarrier structure 310. For subcarrier structure 310, the K total subcarriers are arranged into S non-overlapping sets such that each set contains N consecutive subcarriers, where K=S·N. Hence, set s contains subcarriers $(s-1)$·N+1 through $s$·N, for $s \in \{1,...,S\}$.

In general, the signaling transmission techniques may be used with any subcarrier structure having any number of subcarrier sets. Each subcarrier set may include any number of subcarrier that may be arranged in any manner. For example, the subcarriers in each set may be uniformly distributed across the system bandwidth as shown in FIG. 3A, contiguous as shown in FIG. 3B, and so on. The subcarrier sets may include the same or different numbers of subcarriers.

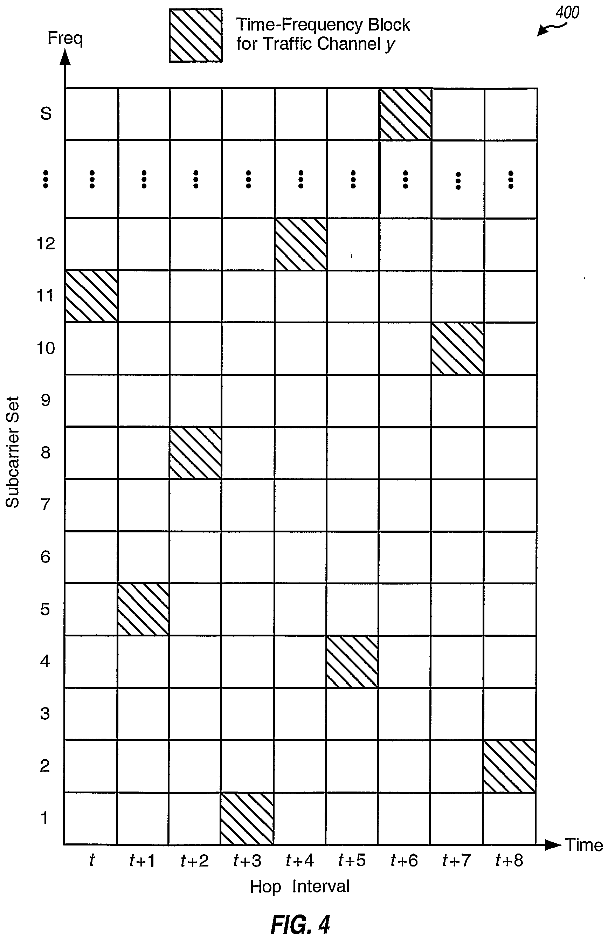

**FIG. 4** shows an exemplary partitioning of time and frequency into time-frequency blocks. A time-frequency block may also be called a tile, a traffic block, or some other terminology. In an embodiment, a time-frequency block corresponds to a specific subcarrier set in a specific time interval, which may span one or multiple symbol periods. A symbol period is the duration of one OFDM symbol or one SC-FDMA symbol. S orthogonal time-frequency blocks are available in each time interval.

System 100 may define traffic channels to facilitate allocation and use of the available system resources. A traffic channel is a means for sending data from a transmitter to a receiver and may also be called a channel, a physical channel, a physical layer channel, a data channel, a transmission channel, and so on. Traffic channels may be defined for various types of system resources such as frequency and time.

In general, any number of traffic channels may be defined, and the traffic channels may have the same or different transmission capacities. For simplicity, much of the following description assumes that S traffic channels are defined, with each traffic channel being mapped to one time-frequency block in each time interval used for data transmission. These S traffic channels may be assigned to up to S terminals.

FIG. 4 also shows an exemplary frequency-hopping scheme 400. For scheme 400, each traffic channel is mapped to a specific sequence of time-frequency blocks that hop across frequency in different time intervals to achieve frequency diversity, as shown in FIG. 4. A hop interval is the amount of time spent on a given subcarrier set and is equal to one time interval for the embodiment shown in FIG. 4. A frequency hopping (FH) pattern indicates the specific time-frequency block to use for each traffic channel in each time interval used for data transmission. FIG. 4 shows the sequence of time-frequency blocks for traffic channel y. The other traffic channels may be mapped to vertically and circularly shifted versions of the time-frequency block sequence for traffic channel y.

Frequency hopping may be used with the subcarrier structures shown in FIGS. 3A and 3B. In an embodiment, which is called symbol rate hopping, a time-frequency block is one distributed subcarrier set (e.g., as shown in FIG. 3A) in one symbol period. For symbol rate hopping, the subcarriers for a traffic channel span across the entire system bandwidth and change from symbol period to symbol period. In another embodiment, which is called block hopping, a time-frequency block is one contiguous subcarrier set (e.g., as shown in FIG. 3B) in multiple symbol periods. For block hopping, the subcarriers for a traffic channel are contiguous and fixed for an entire hop interval but change from hop interval to hop interval. Other frequency hopping schemes may also be defined.

A terminal may send ACK information on a reverse link acknowledgment channel (R-ACKCH) to a base station to acknowledge H-ARQ transmissions sent by the base station on the forward link. The R-ACKCH is also called an ACK channel in the following description. Referring back to FIG. 2, an H-ARQ transmission is sent in one frame, which may span one or multiple hop intervals. The terminal may send an ACK/NAK for each frame in which an H-ARQ transmission is received from the base station. Several embodiments of the ACK channel for different frame sizes are described below.

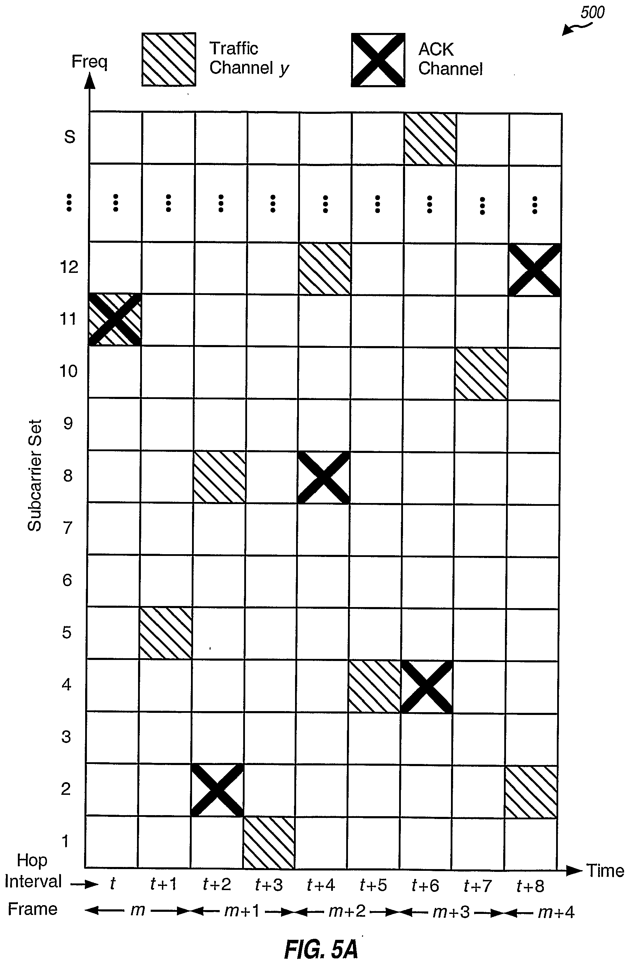

FIG. 5A shows a signaling transmission scheme 500 for the ACK channel. For the embodiment shown in FIG. 5A, a frame spans two hop intervals, and the ACK channel is mapped to one time-frequency block in each ACK frame. An ACK frame is a frame in which the ACK channel is sent, and a data frame is a frame used for data transmission. Each data frame may be associated with an ACK frame that is q frames away, as shown in FIG. 2. The ACK channel may puncture all or a portion of each time-frequency block to which the ACK channel is mapped, as described below.

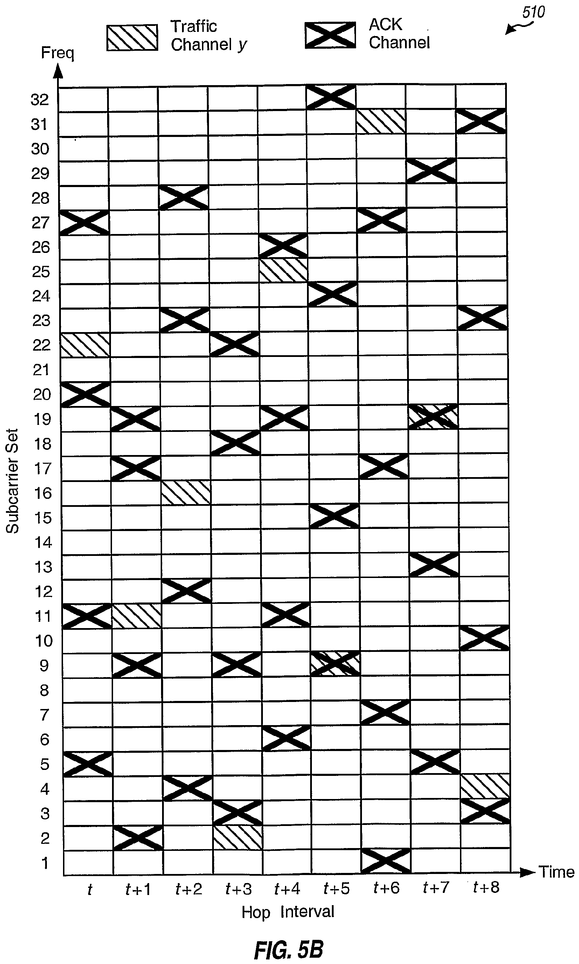

FIG. 5B shows a signaling transmission scheme 510 for the ACK channel. For the embodiment shown in FIG. 5B, S = 32, a frame spans one hop interval, and the ACK channel is mapped to four time-frequency blocks in each ACK frame. The ACK channel may puncture all or a portion of each time-frequency block. ,

For clarity, FIGS. 5A and 5B show the ACK channel puncturing one traffic channel y whenever the ACK channel is mapped to a time-frequency block used for traffic channel y. The ACK channel also punctures other traffic channels, which are not labeled in FIGS. 5A and 5B for clarity. A terminal may transmit data on an assigned traffic channel (e.g., traffic channel y) and may transmit ACK messages on the ACK channel. If many traffic channels are available, then the ACK channel punctures only a portion of the transmission on the assigned traffic channel and punctures mostly the transmissions from other terminals on other traffic channels.

In general, the ACK channel may be mapped to any number of time-frequency blocks in each ACK frame. In an embodiment, the ACK channel is mapped to a fixed number of time-frequency blocks in each ACK frame. This fixed number may be determined based on the number of available traffic channels and/or some other factors. In another embodiment, the ACK channel is mapped to a configurable number of time-frequency blocks in each ACK frame. This configurable number may be determined based on the number of traffic channels that are in use, the number of packets that are sent on each traffic channel, the number of ACK bits that may be sent in each time-frequency block, and so on.

FIGS. 5A and 5B show specific embodiments for puncturing the traffic channels with the ACK channel. In another embodiment, the ACK channel is mapped to one or more fixed subcarrier sets, and the traffic channels hop around the fixed ACK channel. In yet another embodiment, the S subcarrier sets are arranged into G regions, with each region including S / G consecutive subcarrier sets. The ACK channel is then mapped to one subcarrier set in each region. The ACK channel may also puncture the traffic channels in other manners.

In general, the ACK channel may be mapped to time-frequency blocks in a pseudo-random or deterministic manner. The ACK channel may be mapped to different subcarrier sets to achieve frequency and interference diversity, e.g., as shown in FIGS. 5A and 5B. In an embodiment, the ACK channel is pseudo-random with respect to the traffic channels and equally punctures the traffic channels. This may be achieved by hopping the ACK channel, hopping the traffic channels, or hopping both the ACK channel and the traffic channels. An FH pattern may indicate the specific time-frequency block(s) for the ACK channel in each ACK frame. This FH pattern may be sent to the terminals or may be known *a priori* by the terminals. In any case, the terminals have knowledge of the time-frequency blocks occupied by the ACK channel.

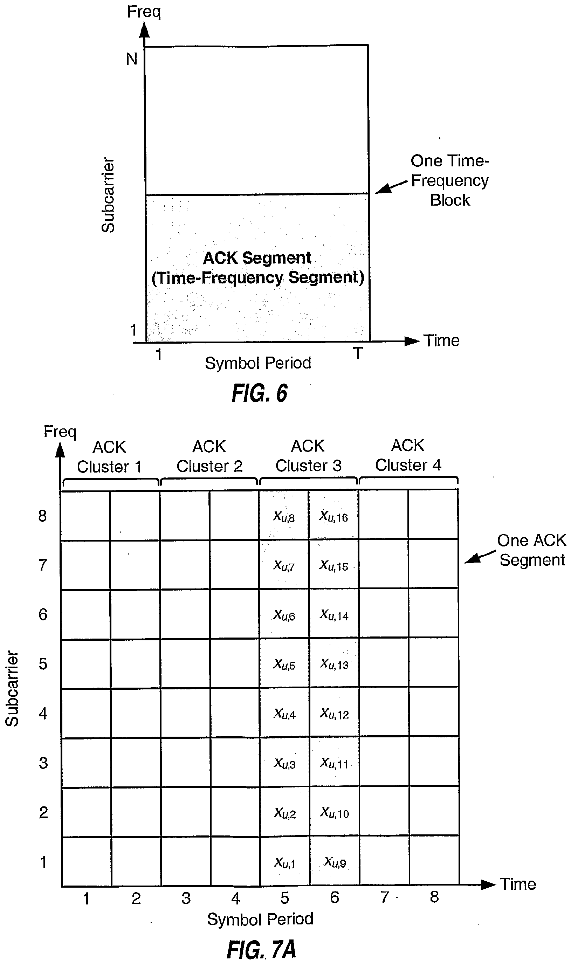

FIG. 6 shows an embodiment of the puncturing of a time-frequency block by the ACK channel. The time-frequency block covers N subcarriers and spans T symbol periods. In general, the ACK channel may puncture all or a portion of the time-frequency block. An ACK segment is a time-frequency segment used for the ACK channel. An ACK segment is formed by the part of the time-frequency block that is punctured and used for the ACK channel. In general, an ACK segment may cover any number of subcarriers and may span any number of symbol periods. In an embodiment, which is not shown in FIG. 6, the ACK channel punctures the entire time-frequency block. For this embodiment, the ACK channel is sent in the entire time-frequency block, and traffic data is not sent in the time-frequency block. In another embodiment, which is shown in FIG. 6, the ACK channel punctures a portion of the time-frequency block. For example, the ACK channel may puncture a half, a quarter, an eighth, or some other fraction of the time-frequency block. The punctured portion may be contiguous in both time and frequency, as shown in FIG. 6. Transmission on contiguous subcarriers may result in a lower peak-to-average power ratio (PAPR), which is desirable. Alternatively, the punctured portion may be spread across frequency, across time, or across both frequency and time. In any case, the ACK channel is sent in the punctured portion of the time-frequency block, and traffic data may be sent in the remaining portion of the time-frequency block.

**FIG. 7A** shows an embodiment of an ACK segment. For this embodiment, the ACK segment covers 8 subcarriers and spans 8 symbol periods. The ACK segment includes 64 transmission units. A transmission unit is one subcarrier in one symbol period. For the embodiment shown in FIG. 7A, the ACK segment is partitioned into four clusters. Each cluster covers 8 subcarriers, spans 2 consecutive symbol periods, and includes 16 transmission units.

In general, an ACK segment may be partitioned in various manners. In another embodiment, each cluster covers two subcarriers and spans all 8 symbol periods. In yet another embodiment, each cluster covers all subcarriers and spans all symbol periods in the ACK segment. For example, cluster 1 may include subcarriers 1 and 2 in symbol periods 1 and 5, subcarriers 3 and 4 in symbol periods 2 and 6, subcarriers 5 and 6 in symbol periods 3 and 7, and subcarriers 7 and 8 in symbol periods 4 and 8.

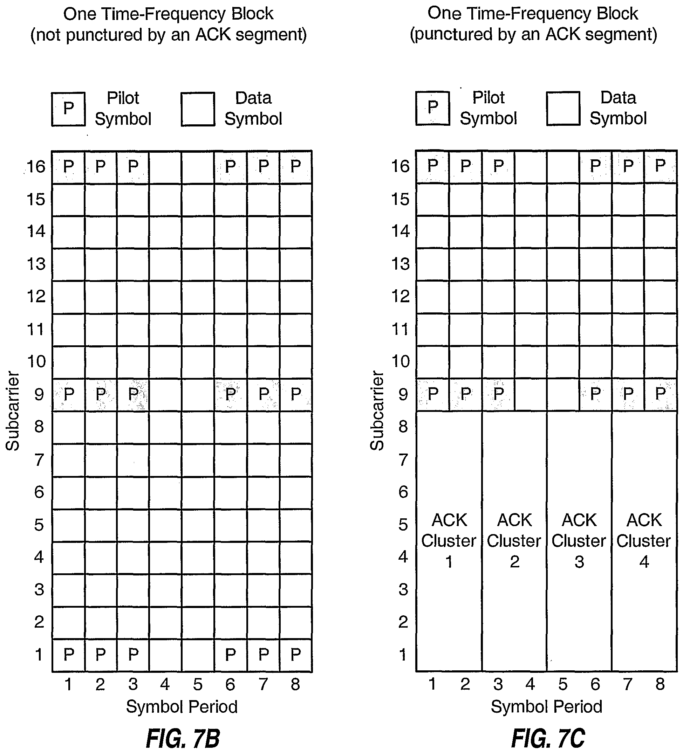

**FIG. 7B** shows an embodiment of a time-frequency block that is not punctured by an ACK segment. For this embodiment, the time-frequency block covers 16 subcarriers, spans 8 symbol periods, and includes 128 transmission units. Pilot symbols may be sent on some of the transmission units, and data symbols may be sent on the remaining transmission units. As used herein, a data symbol is a symbol for traffic data, a pilot symbol is a symbol for pilot, which is data that is known *a priori* by both the base station and the terminals, a signaling symbol is a symbol for signaling, and a symbol is typically a complex value. For the embodiment shown in FIG. 7B, pilot symbols are sent on subcarriers 1, 9 and 16 in symbol periods 1, 2, 3, 6, 7 and 8, or six strips of three pilot symbols. The pilot symbols may be distributed across frequency, e.g., as shown in FIG. 7B, and may be used to derive a channel estimate for the time-frequency block. The channel estimate may be used to perform data detection for the data symbols sent in the time-frequency block.

**FIG. 7C** shows an embodiment of a time-frequency block that is punctured by an ACK segment. For this embodiment, pilot symbols are sent on subcarriers 9 and 16 in symbol periods 1, 2, 3, 6, 7 and 8, or four strips of three pilot symbols. The pilot symbols may be used to derive a channel estimate for the unpunctured portion of the time-frequency block.

The embodiment shown in FIGS. 7B and 7C allows a serving sector to derive an interference estimate for an ACK segment for one or more neighbor sectors. A terminal may transmit on an entire time-frequency block to the serving sector if this time-frequency block is not punctured by an ACK segment for the serving sector. However, this time-frequency block may collide with an ACK segment for one or more neighbor sectors. In this case, the lower half of the time-frequency block may observe higher interference from the ACK segment for the neighbor sector(s). The serving sector may estimate the interference from the other sector(s) based on the pilot symbols sent on subcarrier 1 in symbol periods 1, 2, 3, 6, 7 and 8. The serving sector may use the interference estimate for data detection of the data symbols sent in the time-frequency block.

FIGS. 7B and 7C show one embodiment for sending pilot and data in a time-frequency block. Pilot and data may also be sent using various other patterns for a time-frequency block. In general, a sufficient number of pilot symbols may be sent on a time-frequency block to allow a serving sector to derive a channel estimate for the time-frequency block, with and without puncturing by an ACK segment for the serving sector. A sufficient number of pilot symbols may be located such that the serving sector can derive an interference estimate for the ACK segment from neighbor sectors.

A terminal may send an ACK message for each H-ARQ transmission received from a base station. The amount of information sent in each ACK message may be dependent on the number of packets sent in the corresponding H-ARQ transmission. In an embodiment, an ACK message includes one bit that acknowledges an H-ARQ transmission for one packet. In another embodiment, an ACK message includes multiple (B) bits that acknowledge an H-ARQ transmission for B packets. In an embodiment, an ACK message is sent with On/Off keying, for example, '1' for ACK and '0' for NAK. In another embodiment, an ACK message is encoded prior to transmission.

Multiple terminals may send their ACK messages using code division multiplexing (CDM), time division multiplexing (TDM), frequency division multiplexing (FDM), some other orthogonal multiplexing scheme, or a combination thereof. Multiple terminals may send their ACK messages in the same cluster of an ACK segment using any orthogonal multiplexing scheme.

In an embodiment, ACK messages are sent using CDM. For this embodiment, the terminals are assigned different spreading codes or sequences, and each terminal spread its ACK messages with its spreading code. The spread ACK messages for the terminals are orthogonal to one another in the code domain.

In an embodiment, the spreading codes are orthogonal codes formed with columns of a Hadamard matrix. A $2\times2$ Hadamard matrix $\underline{\mathbf{W}}_{2\times2}$ and a larger size Hadamard matrix $\underline{\mathbf{W}}_{2L\times2L}$ may be expressed as:

$$\underline{\mathbf{W}}_{2\times2} = \begin{bmatrix} 1 & 1 \\ 1 & -1 \end{bmatrix} \quad \text{and} \quad \underline{\mathbf{W}}_{2L\times2L} = \begin{bmatrix} \underline{\mathbf{W}}_{L\times L} & \underline{\mathbf{W}}_{L\times L} \\ \underline{\mathbf{W}}_{L\times L} & -\underline{\mathbf{W}}_{L\times L} \end{bmatrix}. \qquad \text{Eq (1)}$$

Hadamard matrices of square dimensions that are power of two (e.g., $2\times2$, $4\times4$, $8\times8$, and so on) may be formed as shown in equation (1).

In another embodiment, the spreading codes are orthogonal codes formed with columns of a Fourier matrix. An L×L Fourier matrix $\underline{F}_{L \times L}$ has element $f_{n,m}$ in the $n$-th row of the $m$-th column, which may be expressed as:

$$f_{n,m} = e^{-j2\pi \frac{(n-1)(m-1)}{L}} \ , \ \text{ for } \ n = 1, ..., L \ \text{ and } \ m = 1, ..., L . \qquad \text{Eq (2)}$$

Fourier matrices of any square dimension (e.g., 2×2, 3×3, 4×4, 5×5, and so on) may be formed as shown in equation (2).

A 1-bit ACK message may be spread with an L-chip spreading code to generate a spread ACK message that contains L chips, as follows:

$$x_{u,i} = a_u \cdot w_{u,i} \ , \qquad \text{ for } i = 1, ..., L , \qquad \text{Eq (3)}$$

where $a_u$ is an ACK bit for terminal $u$, which may have a value of 0 or 1, or $a_u \in \{0, 1\}$;

$w_{u,i}$ is the $i$-th chip of the spreading code assigned to terminal $u$; and

$x_{u,i}$ is the $i$-th chip of the spread ACK message for terminal $u$.

The L chips of the spread ACK message may be sent in the frequency domain by mapping these L ACK chips to L transmission units in an ACK segment, e.g., like OFDMA. Alternatively, these L ACK chips may be sent in the time domain by performing an L-point DFT/FFT to obtain L frequency-domain symbols and mapping these L symbols to L transmission units in an ACK segment, e.g., like SC-FDMA.

For the embodiment shown in FIG. 7A, a 1-bit ACK message may be sent in 16 transmission units, and the ACK bit may be spread with a 16-chip spreading code to generate 16 ACK chips. These 16 ACK chips may then be mapped to 16 transmission units in one ACK cluster. Up to 15 other terminals may send their ACK messages in the same cluster using other spreading codes. Up to 64 terminals may send ACK messages in one ACK segment.

In an embodiment, a subset of the available spreading codes is used for sending ACK information. The remaining spreading codes are not used for sending ACK information and are used instead for interference estimation. In an embodiment, each cluster includes 16 transmission units (e.g., as shown in FIG. 7A), eight spreading codes may be used to send ACK information and are called usable spreading codes, and the remaining eight spreading codes are used for interference estimation and are called reserved spreading codes. For this embodiment, eight usable spreading codes are available for each cluster, and up to 32 ACK messages may be sent in one ACK segment. For this embodiment, eight reserved spreading codes may be used for interference estimation in each cluster. More than 32 ACK messages may be sent in one ACK segment by allocating more spreading codes for sending ACK messages. More than 32 ACK messages may be sent in one ACK frame by allocating more ACK segments for the ACK channel.

In another embodiment, ACK messages are sent using TDM or FDM. For this embodiment, the terminals are assigned different transmission units for the ACK channel, and each terminal sends its ACK message in its assigned transmission units. The ACK messages for the terminals would then be orthogonal to one another in time and/or frequency. In an embodiment based on the ACK segment shown in FIG. 7A, eight terminals may be assigned eight rows of a cluster, and each terminal may send its ACK bit on the two transmission units in the assigned row. In another embodiment, four clusters are formed, with each cluster covering two subcarrier and spanning 8 symbol periods. Eight terminals may be assigned eight columns of a cluster, and each terminal may send its ACK bit on the two transmission units in the assigned column.

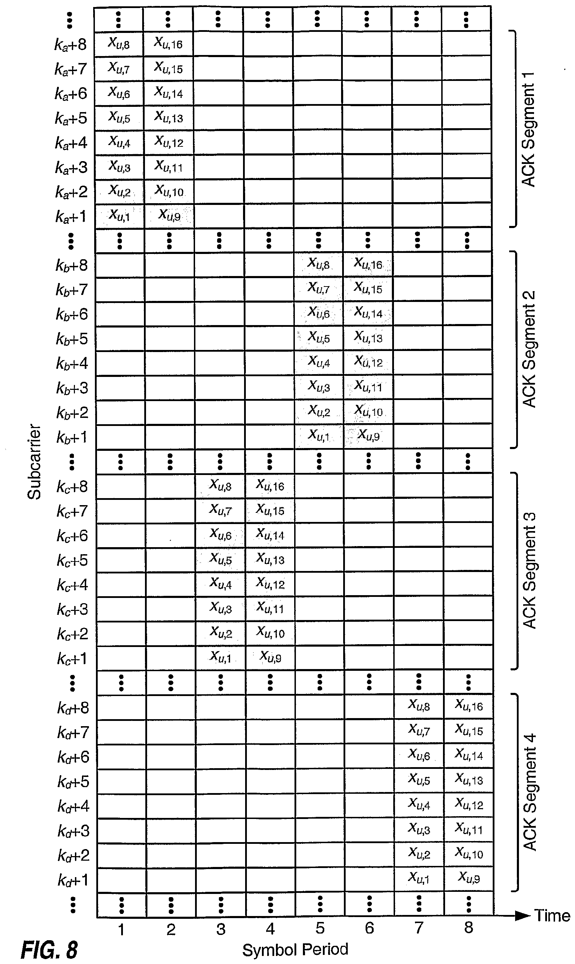

FIG. 8 shows an embodiment for transmitting an ACK message to achieve frequency and time diversity. For this embodiment, the ACK message is sent on different clusters in multiple (C) ACK segments, one cluster in each ACK segment. For the embodiment shown in FIG. 8, C = 4, and the ACK message is sent on four different clusters in four ACK segments to achieve time diversity. Sending the ACK message over a longer time interval may also improve link budget for terminals located at the edge of coverage. These disadvantage terminals typically have an upper limit on transmit power. A longer transmission time interval for the ACK message allows a disadvantage terminal to transmit the ACK message with more energy spread over a longer period of time, which improves the likelihood of correctly receiving the ACK message. The ACK message also achieves frequency diversity since the four ACK segments occupy different subcarrier sets in different 2-symbol intervals. C-th order diversity may be achieved for the ACK message by sending the ACK message in different clusters in C ACK segments.

In an embodiment, an ACK message is sent on different clusters in C ACK segments, and the terminals are mapped to the clusters in a pseudo-random or deterministic manner such that an ACK message for each terminal observes interference from a different set of terminals in each of the C clusters on which that ACK message is sent. This embodiment provides time and frequency diversity for the ACK message sent by each terminal. This embodiment further provides diversity with respect to the interference from the other terminals.

A base station performs the complementary despreading to recover the ACK messages sent by the terminals. For each terminal *u,* the base station despreads the received symbols from each of the C clusters used by terminal *u* with the spreading code assigned to terminal *u* and obtains C despread symbols for the C clusters. For each of the C clusters, the base station may also despread the received symbols with each of the reserved spreading codes to obtain an interference estimate for that cluster. The base station may then scale and combine the C despread symbols for terminal *u* with the interference estimates for the C clusters to obtain a detected ACK message for terminal *u,* as described below.

The signaling transmission techniques described herein may be used with various channel structures. An exemplary channel structure is described below.

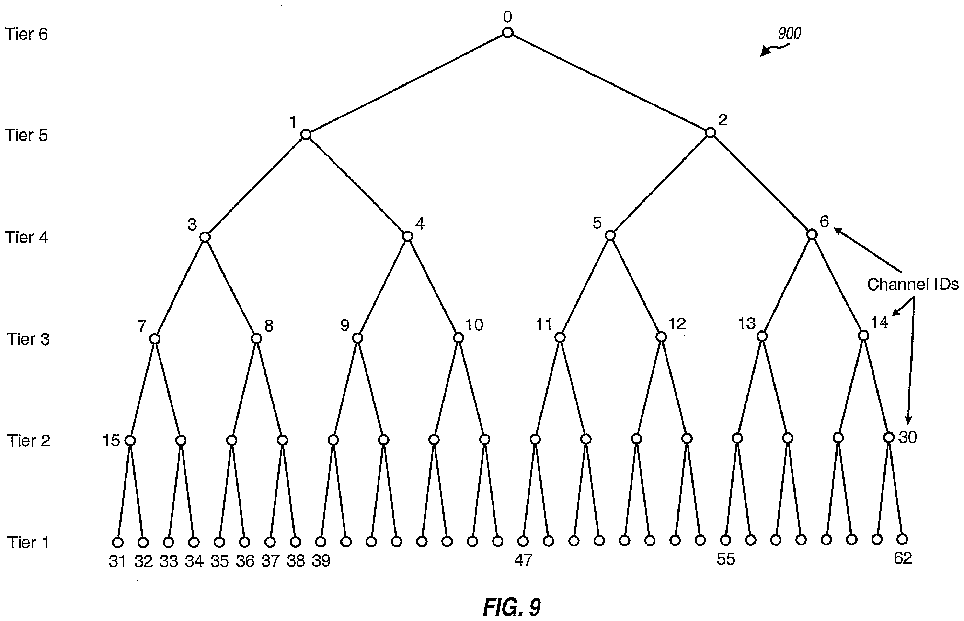

**FIG. 9** shows an embodiment of a binary channel tree 900. For the embodiment shown in FIG. 9, S = 32 subcarrier sets are available for use. A set of traffic channels may be defined with the 32 subcarrier sets. Each traffic channel is assigned a unique channel ID and is mapped to one or more subcarrier sets in each time interval. For example, a traffic channel may be defined for each node in channel tree 900. The traffic channels may be sequentially numbered from top to bottom and from left to right for each tier. The largest traffic channel corresponding to the topmost node is assigned a channel ID of 0 and is mapped to all 32 subcarrier sets. The 32 traffic channels in the lowest tier 1 have channel IDs of 31 through 62 and are called base traffic channels. Each base traffic channel is mapped to one subcarrier set.

The tree structure shown in FIG. 9 places certain restrictions on the use of the traffic channels for an orthogonal system. For each traffic channel that is assigned, all traffic channels that are subsets (or descendants) of the assigned traffic channel and all traffic channels for which the assigned traffic channel is a subset are restricted. The restricted traffic channels are not used concurrently with the assigned traffic channel so that no two traffic channels use the same subcarrier set at the same time.

In an embodiment, an ACK resource is assigned to each traffic channel that is assigned for use. An ACK resource may also be called an ACK sub-channel or some other terminology. An ACK resource includes pertinent resources (e.g., a spreading code and a set of clusters) used to send an ACK message in each ACK frame. For this embodiment, the ACK messages for each traffic channel may be sent on the assigned ACK resource. The assigned ACK resources may be signaled to the terminal.

In another embodiment, an ACK resource is associated with each of the base traffic channels in the lowest tier of a channel tree. This embodiment allows for assignment of the maximum number of traffic channels of the minimum size. A larger traffic channel corresponding to a node above the lowest tier may use (1) the ACK resources for all base traffic channels under the larger traffic channel, (2) the ACK resource for one of the base traffic channels, e.g., the base traffic channel with the lowest channel ID, or (3) the ACK resources for a subset of the base traffic channels under the larger traffic channel. For options (1) and (3) above, an ACK message for the larger traffic channel may be sent using multiple ACK resources to improve the likelihood of correct reception. If multiple packets are sent in parallel, e.g., using multiple-input multiple-output (MIMO) transmission, then a larger traffic channel with multiple base traffic channels may be assigned for the transmission. The number of base traffic channels is equal to or greater than the number of packets. Each packet may be mapped to a different base traffic channel. The ACK for each packet may then be sent using the ACK resource for the associated base traffic channel.

In yet another embodiment, an ACK resource is assigned to each packet to be acknowledged. A terminal may be assigned one ACK resource if one packet is sent in a frame. A terminal may be assigned multiple ACK resources if multiple packets are sent in a frame, e.g., using either a larger traffic channel or spatial multiplexing to transmit via multiple antennas.

In the case of an assignment transmission, which may be a supplemental, decremental, forward link, or reverse link assignment, from the base station, the ACK will be transmitted with a channel ID of the next highest channel ID of an unused data channel. That is, assuming an assignment is transmitted assigning node 15, and thus nodes 31 and 32 to a terminal, the ACK for the assignment would be transmitted on the ACK resources of channel 32. In this way, the base station can determine what packet is being acknowledged based upon the channel on which the ACK is received. However, if no channel is available for acknowledgements of the assignments, if the number of data packets to be acknowledged is less than or equal to the number of available ACK channels or all the nodes do not have ACK resources, all ACKs are determined to be for data packets.

As discussed previously, in some cases, if both a data packet and assignment packet is to be acknowledged, the assignment need not be assigned and only the ACK for the data packet is transmitted. This may be performed for link budget limited or power limited situations.

In yet another embodiment, an H-ARQ transmission may span multiple interlaces, and an ACK message is sent in multiple ACK frames. The base station may combine the detected ACK messages for the multiple ACK frames to improve ACK detection performance.

System 100 may support a single-carrier mode and a multi-carrier mode. In the single-carrier mode, K subcarriers may be available for transmission, and the ACK channel may puncture the traffic channels as described above. In the multi-carrier mode, K subcarriers may be available for each of multiple carriers. The ACK channel may be scaled up for the multi-carrier mode to support more traffic channels and/or to acknowledge more packets that may be sent with more carriers.

The transmit power for the ACK channel may be controlled to achieve good performance, which may be quantified by a given target ACK-to-NAK error rate (e.g., 1%), a given target NAK-to-ACK error rate (e.g., 0.1%), and/or some other metrics. In an embodiment, the transmit power for the ACK channel for a given terminal is adjusted based on the measured performance for the ACK channel for that terminal. In another embodiment, the transmit power for the ACK channel is adjusted based on the transmit power for a reference channel. The reference channel may be any channel that is sent often or regularly, e.g., a traffic channel or a signaling channel such as a channel quality indicator (CQI) channel. The ACK channel may use the transmit power for the reference channel as a power reference. The transmit power for the ACK channel may be set equal to the power reference plus a delta, which may be adjusted based on the performance of the ACK channel. The reference channel is thus used for short-term power set point while the long-term offset of the ACK channel is controlled based on the ACK performance.

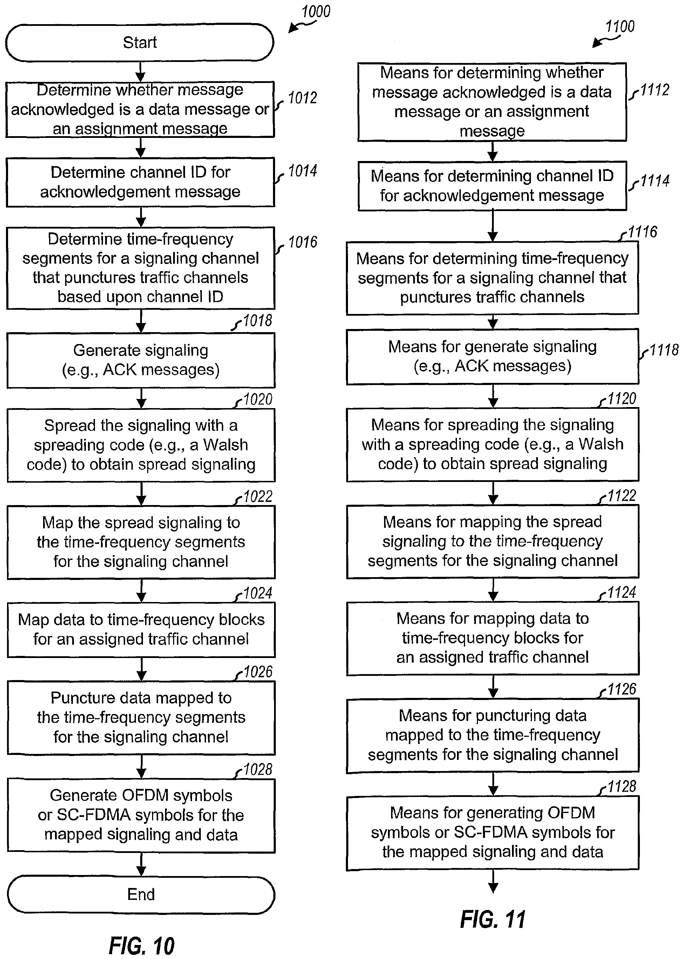

**FIG. 10** shows an embodiment of a process 1000 for acknowledging transmissions on a reverse link by a terminal. For the embodiment shown in FIG. 10, signaling is sent with CDM, however, this need not be the case. The type of message being acknowledged is determined. (block 1012). Based upon the type, an acknowledgment channel is assigned to the acknowledgement message for the message. (block 1014). If the message is a data message or a control message, other than an assignment, the channel ID move from the lowest numbered node to the highest numbered node, or logical resource, that is available and includes acknowledgment channels. If the message being acknowledged is an assignment message, then the highest ordered channel, if available, is assigned to the ACK message for the assignment. An assignment message may be a new assignment, supplemental assignment, or explicit detrimental assignment, depending on system parameters that determine which types of assignments are to be acknowledged.

The time-frequency segments for a signaling channel that punctures traffic channels are then determined, e.g., based on a frequency hopping pattern for the signaling channel (block 1016). Signaling is generated (block 1018) and spread with a spreading code (e.g., a Walsh code) to obtain spread signaling (block 1020). The spread signaling is mapped to the time-frequency segments for the signaling channel (block 1022). Each time-frequency segment may include multiple clusters. A signaling message may be mapped to different clusters in multiple time-frequency segments to achieve diversity. The signaling may also be sent with other multiplexing schemes instead of CDM.

Traffic data is processed and mapped to time-frequency blocks for a traffic channel assigned for use (block 1024). Traffic data that is mapped to the time-frequency segments for the signaling channel is punctured (block 1026). OFDM symbols or SC-FDMA symbols are generated for the mapped signaling and traffic data (block 1028).

**FIG. 11** shows an embodiment of an apparatus 1100 for acknowledging transmissions on a reverse link by a terminal. Apparatus 1100 includes means for determining a message type being acknowledged (block 1112), assigning an channel ID to the acknowledgement message based upon the type (block 1114), means for determining time-frequency segments for a signaling channel that punctures traffic channels (block 1116), means for generating signaling (block 1118), means for spreading the signaling with a spreading code (e.g., a Walsh code) to generate spread signaling (block 1120), and means for mapping the spread signaling to the time-frequency segments for the signaling channel (block 1122). A signaling message may be mapped to different clusters in multiple time-frequency segments to achieve diversity. Apparatus 1110 further includes means for processing and mapping traffic data to time-frequency blocks for an assigned traffic channel (block 1124), means for puncturing traffic data that is mapped to the time-frequency segments for the signaling channel (block 1126), and means for generating OFDM symbols or SC-FDMA symbols for the mapped signaling and traffic data (block 1128).

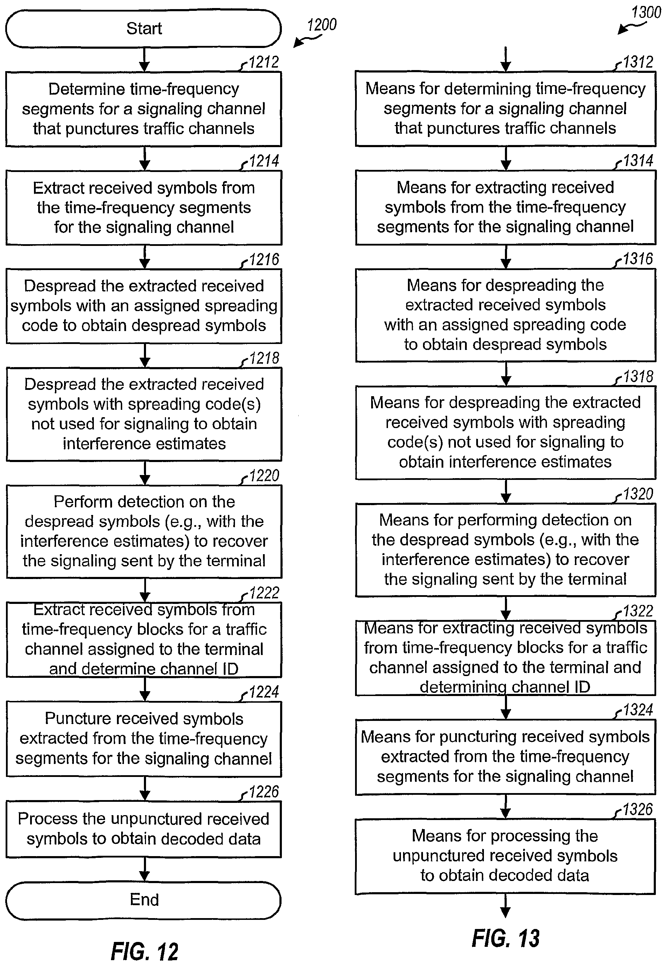

**FIG. 12** shows an embodiment of a process 1200 for determining a message that is being acknowledged on a reverse link channel. Process 1200 may be performed by a base station to receive signaling and data sent on the reverse link. The time-frequency segments for the signaling channel are determined (block 1212). Received symbols are extracted from the time-frequency segments for the signaling channel (block 1214). The extracted received symbols are processed to recover the transmitted signaling. For the embodiment shown in FIG. 12, the extracted received symbols are despread with a spreading code assigned to a terminal to obtain despread symbols for the terminal (block 1216). The extracted received symbols may also be despread with spreading code(s) not used for signaling to obtain interference estimates (block 1218). The despread symbols are detected (e.g., with the interference estimates, if available) to recover the signaling sent by the terminal (block 1220). A signaling message may be sent on different clusters in multiple time-frequency segments. In this case, received symbols are extracted from each cluster and despread with the spreading code, and the despread symbols for the different clusters are detected to recover the signaling message.

Received symbols are extracted from time-frequency blocks for a traffic channel assigned to the terminal and the channel ID is determined (block 1222). Received symbols extracted from the time-frequency segments for the signaling channel are punctured (block 1224). The unpunctured received symbols are processed to obtain decoded data for the terminal (block 1226).

The channel ID and acknowledgement are then sent for further processing to determine the channel being acknowledged.

**FIG. 13** shows an embodiment of an apparatus 1300 for receiving signaling and traffic data. Apparatus 1300 includes means for determining the time-frequency segments for the signaling channel (block 1312), means for extracting received symbols from the time-frequency segments for the signaling channel (block 1314), means for despreading the extracted received symbols with a spreading code assigned to a terminal to obtain despread symbols (block 1316), means for despreading the extracted received symbols with spreading code(s) not used for signaling to obtain interference estimates (block 1318), and means for performing detection on the despread symbols (e.g., with the interference estimates, if available) to recover the signaling sent by the terminal (block 1320). A signaling message may also be recovered from different clusters in multiple time-frequency segments. Apparatus 1300 further includes means for extracting received symbols from time-frequency blocks for a traffic channel assigned to the terminal and the channel ID (block 1322), means for puncturing received symbols extracted from the time-frequency segments for the signaling channel (block 1324), and means for processing the unpunctured received symbols to obtain decoded data for the terminal (block 1326).

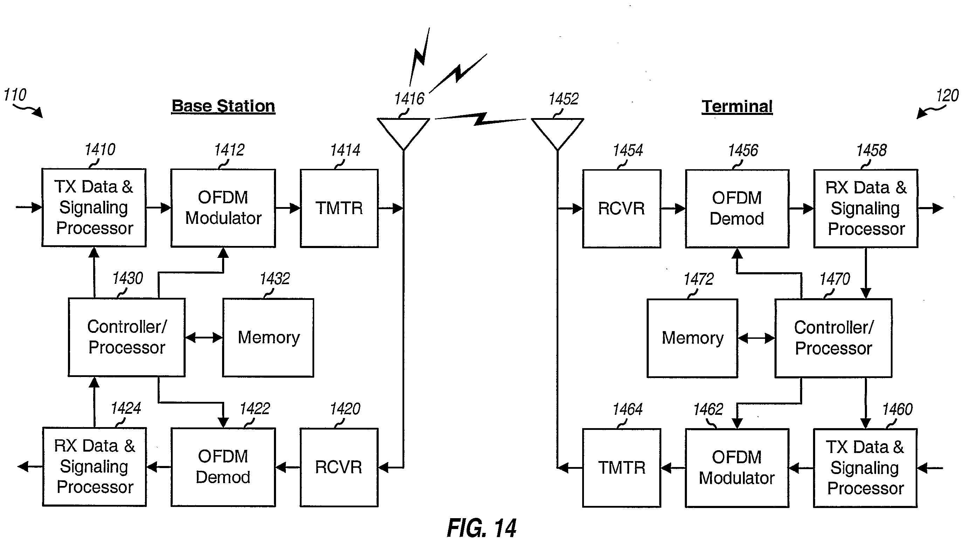

**FIG. 14** shows a block diagram of an embodiment of a base station 110 and a terminal 120 in FIG. 1. For this embodiment, base station 110 and terminal 120 are each equipped with a single antenna.

At base station 110, a transmit (TX) data and signaling processor 1410 receives traffic data for one or more terminals, processes (e.g., formats, encodes, interleaves, and symbol maps) the traffic data for each terminal based on one or more coding and modulation schemes selected for that terminal, and provides data symbols. Processor 1410 also generates pilot symbols and signaling symbols. An OFDM modulator 1412 performs OFDM modulation on the data symbols, pilot symbols, and signaling symbols and provides OFDM symbols. If system 100 utilizes SC-FDMA, then modulator 1412 performs SC-FDMA modulation and provides SC-FDMA symbols. A transmitter (TMTR) 1414 conditions (e.g., converts to analog, filters, amplifies, and upconverts) the OFDM symbols to generate an FL modulated signal, which is transmitted from an antenna 1416.

At terminal 120, an antenna 1452 receives FL modulated signals from base station 110 and possibly other base stations and provides a received signal to a receiver (RCVR) 1454. Receiver 1454 processes (e.g., conditions and digitizes) the received signal and provides received samples. An OFDM demodulator (Demod) 1456 performs OFDM demodulation on the received samples and provides received symbols for the K total subcarriers. A receive (RX) data and signaling processor 1458 processes (e.g., symbol demaps, deinterleaves, and decodes) the received symbols and provides decoded data and signaling for terminal 120.

A controller/processor 1470 receives decoding results from processor 1458 and generates ACK messages for terminal 120. A TX data and signaling processor 1460 generates signaling symbols for the ACK messages, based upon the type of message being acknowledged, data symbols for traffic data to be sent to base station 110, and pilot symbols. An OFDM modulator 1462 performs OFDM modulation on the data symbols, pilot symbols, and signaling symbols and provides OFDM symbols. A transmitter 1464 conditions the OFDM symbols and generates an RL modulated signal, which is transmitted from antenna 1452.

At base station 110, RL modulated signals from terminal 120 and other terminals are received by antenna 1416, conditioned and digitized by a receiver 1420, demodulated by an OFDM demodulator 1422, and processed by an RX data and signaling processor 1424 to recover the ACK messages, and determine the channel ID of the ACK message to determine the message type being acknowledged, and traffic data sent by terminal 120 and other terminals. A controller/processor 1430 receives the detected ACK messages and controls the data transmissions on the forward link to the terminals.

Controllers/processors 1430 and 1470 direct the operation of various processing units at base station 110 and terminal 120, respectively. Memories 1432 and 1472 store program codes and data for base station 110 and terminal 120, respectively.

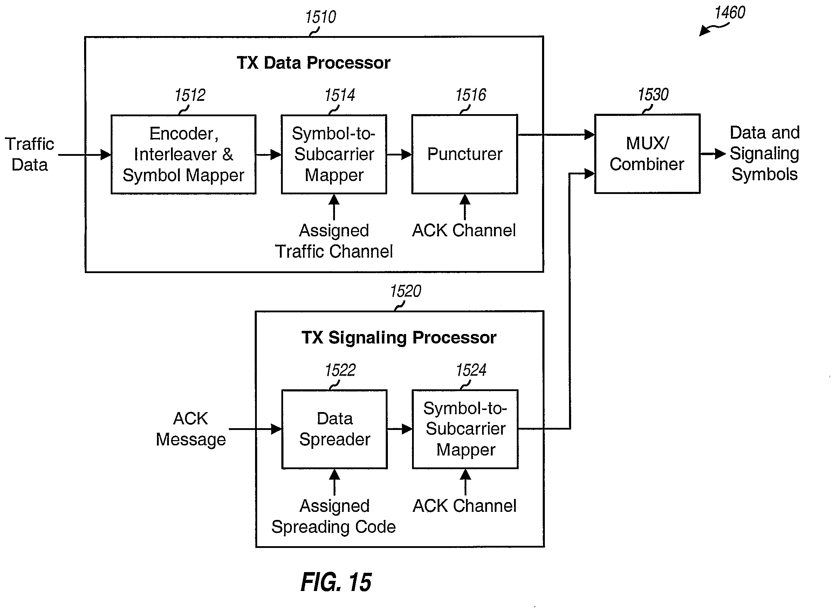

**FIG. 15** shows a block diagram of an embodiment of TX data and signaling processor 1460 at terminal 120. Processor 1460 includes a TX data processor 1510, a TX signaling processor 1520, and a multiplexer (MUX)/combiner 1530.

Within TX data processor 1510, a unit 1512 encodes, interleaves, and symbol maps traffic data and provides data symbols. A symbol-to-subcarrier mapper 1514 maps the data symbols to the time-frequency blocks for a traffic channel assigned to terminal 120. A puncturer 1516 punctures data symbols that are mapped to time-frequency segments for the ACK channel, based upon the channel ID that is based upon the type of message being acknowledged, and provides the unpunctured data symbols.

Within TX signaling processor 1520, a data spreader 1522 spreads an ACK message with a spreading code assigned to terminal 120 and provides ACK chips. For the embodiment shown in FIG. 15, the spreading is performed in the frequency domain, and data spreader 1522 provides the ACK chips as signaling symbols. In another embodiment, which is not shown in FIG. 15, the spreading is performed in the time domain, and a DFT unit transforms the ACK chips for each symbol period to the frequency domain and provides the signaling symbols. For both embodiments, a symbol-to-subcarrier mapper 1524 maps the signaling symbols to the proper clusters in the time-frequency segments for the ACK channel. Unit 1530 combines the data symbols from processor 1510 and the signaling symbols from processor 1520 and provides the mapped data and signaling symbols.

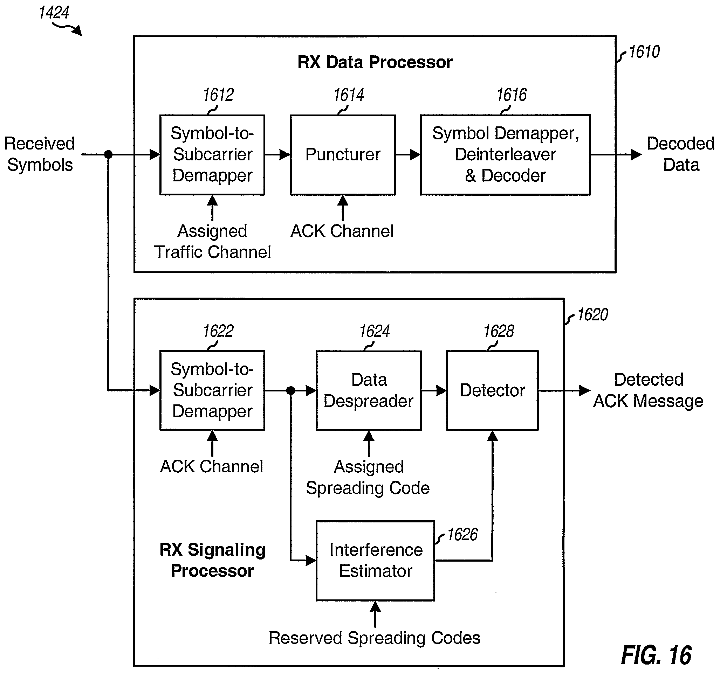

**FIG. 16** shows a block diagram of an embodiment of RX data and signaling processor 1424 at base station 110. Processor 1424 includes an RX data processor 1610 and an RX signaling processor 1620. For clarity, the processing to recover traffic data and signaling from one terminal $u$ (e.g., terminal 120 in FIGS. 14 and 15) is described below.

Within RX data processor 1610, a symbol-to-subcarrier demapper 1612 extracts received symbols from the time-frequency blocks for the traffic channel assigned to terminal 120. A puncturer 1614 punctures the received symbols extracted from the time-frequency segments for the ACK channel and provides the unpunctured received symbols. A unit 1616 symbol demaps, deinterleaves, and decodes the unpunctured received symbols and provides decoded data for terminal 120.

Within RX signaling processor 1620, a symbol-to-subcarrier demapper 1622 extracts received symbols from the time-frequency segments for the ACK channel and then may provide the channel information along with the detected ACK symbol to detector 1628 for providing for forwarding with the detected ACK symbols. If the spreading is performed in the frequency domain, then an IDFT unit transforms the received symbols for each symbol period to the time domain and provides time-domain samples for despreading (not shown in FIG. 16). If the spreading is performed in the frequency domain, which is shown in FIG. 16 and assumed for the description below, then demapper 1622 provides the received symbols for despreading. A data despreader 1624 despreads the received symbols from each cluster with the spreading code assigned to terminal 120, as follows:

$$z_{u,c} = \sum_i r_{c,i} \cdot w_{u,i} \ , \qquad\qquad\qquad\qquad \text{Eq (4)}$$

where $r_{c,i}$ is the $i$-th received symbol from cluster $c$; and
$z_{u,c}$ is a despread symbol from cluster $c$ for terminal $u$.

An interference estimator 1626 despreads the received symbols from each cluster with each reserved spreading code as follows:

$$z_{j,c} = \sum_i r_{c,i} \cdot w_{j,i} \ , \qquad \text{for } j \in \text{RC} \qquad\qquad \text{Eq (5)}$$

where $z_{j,c}$ is a despread symbol for reserved spreading code $j$; and
RC is a set of all reserved spreading codes.

Interference estimator 1626 then derives an interference estimate for each cluster by summing the squared magnitude of the despread symbols for the reserved spreading codes, as follows:

$$I_{0,c} = \sum_{j \in \text{RC}} | z_{j,c} |^2 \ , \qquad\qquad\qquad\qquad \text{Eq (6)}$$

where $I_{0,c}$ is the interference estimate for cluster $c$.

A detector 1628 performs detection for the ACK message sent by terminal 120 based on the despread symbols and the interference estimates for all clusters, as follows:

$$A_u = \sum_c \frac{| z_{u,c} |^2}{I_{0,c}} \ , \qquad\qquad\qquad\qquad \text{Eq (7)}$$

and

$$\text{ACK}_u = \begin{cases} \text{'1'} & A_u > A_{th} \ , \\ \text{'0'} & \text{otherwise} \ , \end{cases} \qquad\qquad \text{Eq (8)}$$

where $A_{th}$ is a threshold used for detecting an ACK bit and $ACK_u$ is the detected ACK message for terminal 120. Equation (7) computes the energy of the despread symbol for the ACK bit for each cluster, scales the symbol energy for each cluster based on the interference estimate for that cluster, and combines the weighted results for all clusters used to send the ACK bit.

The ACK detection may also be performed in other manners. In another embodiment, base station 110 performs ACK detection with interference cancellation. For example, base station 110 may detect the ACK bit for the strongest received terminal, estimate the interference due to this terminal, subtract the estimated interference from the received symbols, and detect the ACK bit for the next strongest received terminal based on the interference-canceled received symbols. In yet another embodiment, base station 110 performs coherent ACK detection. For this embodiment, base station 110 derives a channel estimate for each terminal based on a pilot sent by that terminal and performs ACK detection with the channel estimate.

The signaling transmission techniques described herein may be implemented by various means. For example, these techniques may be implemented in hardware, firmware, software, or a combination thereof. For a hardware implementation, the processing units at a terminal may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof. The processing units at a base station may also be implemented within one or more ASIC, DSPs, processors, and so on.

For a firmware and/or software implementation, the techniques may be implemented with modules (e.g., procedures, functions, and so on) that perform the functions described herein. The software codes may be stored in a memory (e.g., memory 1432 or 1472 in FIG. 14) and executed by a processor (e.g., processor 1430 or 1470). The memory may be implemented within the processor or external to the processor.

It should be noted that the concept of channels herein refers to information or transmission types that may be transmitted by the access point or access terminal. It does not require or utilize fixed or predetermined blocks of subcarriers, time periods, or other resources dedicated to such transmissions.

Further, time-frequency segments are exemplary resources that may be assigned for signaling and data. The time-frequency segments may also comprise frequency subcarriers, transmission symbols, or other resources, in addition to time frequency segments.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the principles and novel features disclosed herein.

**Claims**

1. An apparatus comprising:

   means for determining (1112) a type of message being acknowledged;
   means for assigning a channel identification based upon the message type, wherein means for assigning a channel identification comprises means for assigning (1114) an acknowledgement resource to an acknowledgement for the message based upon the message type, wherein each acknowledgement resource is assigned to a traffic channel from a set of traffic channels, each traffic channel in the set of traffic channels having a channel identification associated therewith, wherein the channel identification comprises a numerical identifier of one of a plurality of numerical identifiers that range from a lowest to a highest numerical value said lowest identifier corresponding to a largest traffic channel in the set of traffic channels;
   means for generating (1118) the acknowledgement for transmission via a communication channel; and
   means for mapping the acknowledgment, based upon the channel identification, to resources for a signalling channel that punctures traffic channels, wherein the highest available channel identification is assigned to acknowledgements of assignment messages.

2. The apparatus of claim 1, wherein the assignment messages comprise supplemental assignment messages.

3. The apparatus of claim 1, wherein the assignment messages comprise a forward link assignment or a reverse link assignment.

4. The apparatus of claim 1, wherein the assignment messages comprise decremental assignment messages.

5. The apparatus of claim 1, wherein the means for assigning comprises means for assigning a lowest channel identification to acknowledgements to data messages.

6. The apparatus of claim 1, wherein the means for mapping comprises means for mapping the acknowledgement to multiple time-frequency segments.

7. The apparatus of claim 1 wherein said means for determining means for assigning means for generating and means for mapping comprises at least one processor, said apparatus further comprising a memory coupled to the at least one processor.

8. The apparatus of claim 7, wherein the at least one processor is configured to spread the acknowledgment with a spreading code, and to map the spread acknowledgment to the resources for the acknowledgment channel.

9. The apparatus of claim 6, wherein the multiple time-frequency segments cover different frequency subcarriers.

10. The apparatus of claim 7, wherein the resources comprise time-frequency segments that each comprise multiple clusters, and wherein the at least one processor is configured to map an acknowledgment message to a cluster in each of multiple time-frequency segments.

11. The apparatus of claim 7, wherein the at least one processor is configured to determine the resources for the acknowledgment channel based on a frequency hopping pattern.

12. The apparatus of claim 7, wherein the acknowledgment channel equally punctures the traffic channels.

13. The apparatus of claim 7, wherein the traffic channels are defined by a channel tree, and wherein each node in the channel tree is associated with specific resources in the acknowledgment channel and wherein acknowledgments for assignment messages are assigned the highest available node.

14. The apparatus of claim 7, wherein the at least one processor is configured to generate orthogonal frequency division multiplexing, OFDM symbols carrying the mapped signaling.

15. The apparatus of claim 8, wherein the at least one processor is configured to generate single-carrier frequency division multiple access, SC-FDMA symbols carrying the mapped signaling.

16. The apparatus of claim 8, wherein the assignment message is a supplemental assignment message.

17. The apparatus of claim 8, wherein the assignment message is a decremental assignment message.

18. The apparatus of claim 8, wherein the assignment message may be a forward link assignment or a reverse link assignment.

19. A method comprising:

   determining (1012) a type of message being acknowledged;
   assigning (1014) a channel identification based upon the message type, wherein assigning a channel identification comprises assigning an acknowledgement resource to an acknowledgement for the message based upon the message type, wherein each acknowledgement resource is assigned to a traffic channel from a set of traffic channels, each traffic channel in the set of traffic channels having a channel identification associated therewith the channel identification comprising a numerical identifier of one of a plurality of numerical identifiers that range from a lowest to a highest numerical value said lowest identifier corresponding to a largest traffic channel in the set of traffic channels;
   generating (1018) the acknowledgment for transmission via a communication channel; and
   mapping the acknowledgment (1020,1024) based upon the channel identification to resources for a signalling channel that punctures traffic channels wherein the highest available channel identification is assigned to acknowledgements of assignment messages.

20. The method of claim 19, further comprising:

spreading the acknowledgment with a spreading code, and wherein the spread signaling is mapped to the resources for the signaling channel.

21. The method of claim 19, wherein mapping comprises mapping a signaling message to multiple time-frequency segments.

22. The method of claim 19, wherein the assignment messages comprise supplemental assignment messages.

23. The method of claim 19, wherein the assignment messages comprise decremental assignment messages.

24. The method of claim 19, wherein the assignment message may be a forward link assignment or a reverse link assignment.

25. The method of claim 19, wherein assigning comprises assigning a lowest channel identification to acknowledgements to data messages.


**Patentansprüche**

1. Eine Vorrichtung, die Folgendes aufweist:

   Mittel zum Bestimmen (1112) eines Typs von Nachricht, der bestätigt wird; Mittel zum Zuweisen einer Kanalidentifizierung basierend auf dem Nachrichtentyp, wobei die Mittel zum Zuweisen einer Kanalidentifizierung Mittel aufweisen zum Zuweisen (1114) einer Bestätigungsressource zu einer Bestätigung für die Nachricht basierend auf dem Nachrichtentyp, wobei jede Bestätigungsressource einem Verkehrskanal aus einem Satz von Verkehrskanälen zugewiesen wird, wobei jeder Verkehrskanal in dem Satz von Verkehrskanälen eine Kanalidentifizierung hat, die damit assoziiert ist, wobei die Kanalidentifizierung einen numerischen Identifikator von einem einer Vielzahl numerischer Identifikatoren aufweist, die von einem niedrigsten zu einem höchsten numerischen Wert reichen, wobei der niedrigste Identifikator einem größten Verkehrskanal in dem Satz von Verkehrskanälen entspricht;
   Mittel zum Generieren (1118) der Bestätigung zur Sendung über einen Kommunikationskanal; und
   Mittel zum Abbilden der Bestätigung, basierend auf der Kanalidentifizierung, auf Ressourcen für einen Signalisierungskanal, der Verkehrskanäle punktiert, wobei die höchste verfügbare Kanalidentifizierung Bestätigungen von Zuweisungsnachrichten zugewiesen wird.

2. Vorrichtung nach Anspruch 1, wobei die Zuweisungsnachrichten ergänzende Zuweisungsnachrichten aufweisen.

3. Vorrichtung nach Anspruch 1, wobei die Zuweisungsnachrichten eine Vorwärtsverbindungszuweisung oder eine Rückwärtsverbindungszuweisung aufweisen.

4. Vorrichtung nach Anspruch 1, wobei die Zuweisungsnachrichten dekrementale bzw. rückwärts zählende Zuweisungsnachrichten aufweisen.

5. Vorrichtung nach Anspruch 1, wobei die Mittel zum Zuweisen Mittel aufweisen zum Zuweisen einer niedrigsten Kanalidentifizierung zu Bestätigungen auf Datennachrichten.

6. Vorrichtung nach Anspruch 1, wobei die Mittel zum Abbilden Mittel aufweisen zum Abbilden der Bestätigung auf mehrere Zeitfrequenzsegmente.

7. Vorrichtung nach Anspruch 1, wobei die Mittel zum Bestimmen, die Mittel zum Zuweisen, die Mittel zum Generieren und die Mittel zum Abbilden wenigstens einen Prozessor aufweisen, wobei die Vorrichtung weiter einen Speicher aufweist, der an den wenigstens einen Prozessor gekoppelt ist.

8. Vorrichtung nach Anspruch 7, wobei der wenigstens eine Prozessor konfiguriert ist zum Spreizen der Bestätigung mit einem Spreizcode und zum Abbilden der gespreizten Bestätigung auf die Ressourcen für den Bestätigungskanal.

9. Vorrichtung nach Anspruch 6, wobei die mehreren Zeitfrequenzsegmente unterschiedliche Frequenzsubträger abdecken.

**10.** Vorrichtung nach Anspruch 7, wobei die Ressourcen Zeitfrequenzsegmente aufweisen, die jeweils mehrere Cluster aufweisen, und wobei der wenigstens eine Prozessor konfiguriert ist zum Abbilden einer Bestätigungsnachricht auf ein Cluster in jedem der mehreren Zeitfrequenzsegmente.

**11.** Vorrichtung nach Anspruch 7, wobei der wenigstens eine Prozessor konfiguriert ist zum Bestimmen der Ressourcen für den Bestätigungskanal basierend auf einem Frequenzsprung- bzw. Frequenz-Hopping-Muster.

**12.** Vorrichtung nach Anspruch 7, wobei der Bestätigungskanal die Verkehrskanäle gleichmäßig punktiert.

**13.** Vorrichtung nach Anspruch 7, wobei die Verkehrskanäle durch einen Kanalbaum definiert werden, und wobei jeder Knoten in dem Kanalbaum mit spezifischen Ressourcen in dem Bestätigungskanal assoziiert ist und wobei Bestätigungen für Zuweisungsnachrichten der höchste verfügbare Knoten zugewiesen wird.

**14.** Vorrichtung nach Anspruch 7, wobei der wenigstens eine Prozessor konfiguriert ist zum Generieren von Orthogonalfrequenzmultiplexing- bzw. OFDM-Symbolen (OFDM = orthogonal frequency division multiplexing), die die abgebildete Signalisierung tragen.

**15.** Vorrichtung nach Anspruch 8, wobei der wenigstens eine Prozessor konfiguriert ist zum Generieren von Einzelträger-Frequenzvielfachzugriffs- bzw. SC-FDMA-Symbolen (SC-FDMA = single-carrier frequency division multiple access), die die abgebildete Signalisierung tragen.

**16.** Vorrichtung nach Anspruch 8, wobei die Zuweisungsnachricht eine ergänzende Zuweisungsnachricht ist.

**17.** Vorrichtung nach Anspruch 8, wobei die Zuweisungsnachricht eine dekrementale bzw. rückwärts zählende Zuweisungsnachricht ist.

**18.** Vorrichtung nach Anspruch 8, wobei die Zuweisungsnachricht eine Vorwärtsverbindungszuweisung oder eine Rückwärtsverbindungszuweisung sein kann.

**19.** Ein Verfahren, das Folgendes aufweist:

Bestimmen (1012) eines Typs von Nachricht, der bestätigt wird;
Zuweisen (1014) einer Kanalidentifizierung basierend auf dem Nachrichtentyp, wobei das Zuweisen einer Kanalidentifizierung Zuweisen einer Bestätigungsressource an eine Bestätigung für die Nachricht basierend auf dem Nachrichtentyp aufweist, wobei jede Bestätigungsressource einem Verkehrskanal aus einem Satz von Verkehrskanälen zugewiesen wird, wobei jeder Verkehrskanal in dem Satz von Verkehrskanälen eine Kanalidentifizierung hat, die damit assoziiert ist, wobei die Kanalidentifizierung einen numerischen Identifikator von einem einer Vielzahl von numerischen Identifikatoren aufweist, die von einem niedrigsten zu einem höchsten numerischen Wert reichen, wobei der niedrigste Identifikator einem größten Verkehrskanal in dem Satz von Verkehrskanälen entspricht;
Generieren (1018) der Bestätigung zur Sendung über einen Kommunikationskanal; und
Abbilden der Bestätigung (1020, 1024), basierend auf der Kanalidentifizierung, auf Ressourcen für einen Signalisierungskanal, der Verkehrskanäle punktiert, wobei die höchste verfügbare Kanalidentifizierung Bestätigungen von Zuweisungsnachrichten zugewiesen wird.

**20.** Verfahren nach Anspruch 19, das weiter Folgendes aufweist:

Spreizen der Bestätigung mit einem Spreizcode, und wobei die gespreizte Signalisierung auf die Ressourcen für den Signalisierungskanal abgebildet wird.

**21.** Verfahren nach Anspruch 19, wobei das Abbilden Abbilden einer Signalisierungsnachricht auf mehrere Zeitfrequenzsegmente aufweist.

**22.** Verfahren nach Anspruch 19, wobei die Zuweisungsnachrichten ergänzende Zuweisungsnachrichten aufweisen.

**23.** Verfahren nach Anspruch 19, wobei die Zuweisungsnachrichten dekrementale bzw. rückwärts zählende Zuweisungsnachrichten aufweisen.

**24.** Verfahren nach Anspruch 19, wobei die Zuweisungsnachricht eine Vorwärtsverbindungzuweisung oder eine Rückwärtsverbindungszuweisung sein kann.

**25.** Verfahren nach Anspruch 19, wobei das Zuweisen Zuweisen einer niedrigsten Kanalidentifizierung zu Bestätigungen auf Datennachrichten aufweist.


**Revendications**

**1.** Appareil comprenant :

des moyens pour déterminer (1112) un type de message en cours d'acquittement ; des moyens pour attribuer une identification de canal sur la base du type de message, dans lequel les moyens pour attribuer une identification de canal comprennent des moyens pour attribuer (1114) une ressource d'acquittement à un acquittement pour le message sur la base du type de message, dans lequel chaque ressource d'acquittement est attribuée à un canal de trafic parmi un ensemble de canaux de trafic, chaque canal de trafic dans l'ensemble de canaux de trafic ayant une identification de canal associée à celui-ci, dans lequel l'identification de canal comprend un identifiant numérique de l'un d'une pluralité d'identifiants numériques qui sont dans une plage d'une valeur numérique la plus faible à une valeur numérique la plus élevée, ledit identifiant le plus faible correspondant à un canal de trafic le plus grand dans l'ensemble de canaux de trafic ;
des moyens pour générer (1118) l'acquittement pour une transmission par l'intermédiaire d'un canal de communication ; et
des moyens pour mapper l'acquittement, sur la base de l'identification de canal, vers des ressources pour un canal de signalisation qui poinçonne des canaux de trafic, dans lequel l'identification de canal disponible la plus élevée est attribuée à des acquittements de messages d'attribution.

**2.** Appareil selon la revendication 1, dans lequel les messages d'attribution comprennent des messages d'attribution supplémentaires.

**3.** Appareil selon la revendication 1, dans lequel les messages d'attribution comprennent une attribution de liaison avant ou une attribution de liaison inverse.

**4.** Appareil selon la revendication 1, dans lequel les messages d'attribution comprennent des messages d'attribution décrémentaux.

**5.** Appareil selon la revendication 1, dans lequel les moyens pour attribuer comprennent des moyens pour attribuer une identification de canal la plus faible à des acquittements à des messages de données.

**6.** Appareil selon la revendication 1, dans lequel les moyens pour mapper comprennent des moyens pour mapper l'acquittement vers de multiples segments temps-fréquence.

**7.** Appareil selon la revendication 1, dans lequel lesdits moyens pour déterminer, lesdits moyens pour attribuer, lesdits moyens pour générer et lesdits moyens pour mapper comprennent au moins un processeur, ledit appareil comprenant en outre une mémoire couplée au dit au moins un processeur.

**8.** Appareil selon la revendication 7, dans lequel ledit au moins un processeur est configuré pour étaler l'acquittement avec un code d'étalement, et pour mapper l'acquittement étalé vers les ressources pour le canal d'acquittement.

**9.** Appareil selon la revendication 6, dans lequel les multiples segments temps-fréquence couvrent différentes sous-porteuses de fréquence.

**10.** Appareil selon la revendication 7, dans lequel les ressources comprennent des segments temps-fréquence, chacun des segments comprenant de multiples grappes, et dans lequel ledit au moins un processeur est configuré pour mapper un message d'acquittement vers une grappe dans chacun des multiples segments temps-fréquence.

**11.** Appareil selon la revendication 7, dans lequel ledit au moins un processeur est configuré pour déterminer les ressources pour le canal d'acquittement sur la base d'un motif de sauts de fréquence.

**12.** Appareil selon la revendication 7, dans lequel le canal d'acquittement poinçonne de manière égale les canaux de trafic.

**13.** Appareil selon la revendication 7, dans lequel les canaux de trafic sont définis par une arborescence de canaux, et dans lequel chaque noeud dans l'arborescence de canaux est associé à des ressources spécifiques dans le canal d'acquittement, et dans lequel les acquittements pour les messages d'attribution sont attribués au noeud disponible le plus élevé.

**14.** Appareil selon la revendication 7, dans lequel ledit au moins un processeur est configuré pour générer des symboles OFDM, Orthogonal Frequency Division Multiplexing, transportant la signalisation mappée.

**15.** Appareil selon la revendication 8, dans lequel ledit au moins un processeur est configuré pour générer des symboles SC-FDMA, Single-Carrier Frequency Division Multiple Access, transportant la signalisation mappée.

**16.** Appareil selon la revendication 8, dans lequel le message d'attribution est un message d'attribution supplémentaire.

**17.** Appareil selon la revendication 8, dans lequel le message d'attribution est un message d'attribution décrémental.

**18.** Appareil selon la revendication 8, dans lequel le message d'attribution peut être une attribution de liaison avant ou une attribution de liaison inverse.

**19.** Procédé comprenant :

la détermination (1012) d'un type de message en cours d'acquittement;
l'attribution (1014) d'une identification de canal sur la base du type de message, dans lequel l'attribution d'une identification de canal comprend l'assignation d'une ressource d'acquittement à un acquittement pour le message sur la base du type de message, dans lequel chaque ressource d'acquittement est attribuée à un canal de trafic parmi un ensemble de canaux de trafic, chaque canal de trafic dans l'ensemble de canaux de trafic ayant une identification de canal associée à celui-ci, l'identification de canal comprenant un identifiant numérique de l'un d'une pluralité d'identifiants numériques qui sont dans une plage d'une valeur numérique la plus faible à une valeur numérique la plus élevée, ledit identifiant le plus faible correspondant à un canal de trafic le plus grand dans l'ensemble de canaux de trafic ;
la génération (1018) de l'acquittement pour une transmission à travers un canal de communication ; et
le mappage de l'acquittement (1020, 1024) sur la base de l'identification de canal vers des ressources pour un canal de signalisation qui poinçonne les canaux de trafic, dans lequel l'identification de canal disponible la plus élevée est attribuée à des acquittements de messages d'attribution.

**20.** Procédé selon la revendication 19, comprenant en outre :

l'étalement de l'acquittement avec un code d'étalement, et dans lequel la signalisation étalée est mappée vers les ressources pour le canal de signalisation.

**21.** Procédé selon la revendication 19, dans lequel le mappage comprend le mappage d'un message de signalisation vers de multiples segments temps-fréquence.

**22.** Procédé selon la revendication 19, dans lequel les messages d'attribution comprennent des messages d'attribution supplémentaires.

**23.** Procédé selon la revendication 19, dans lequel les messages d'attribution comprennent des messages d'attribution décrémentaux.

**24.** Procédé selon la revendication 19, dans lequel le message d'attribution peut être une attribution de liaison avant ou une attribution de liaison inverse.

**25.** Procédé selon la revendication 19, dans lequel l'attribution comprend l'attribution d'une identification de canal la plus faible à des acquittements à des messages de données.

FIG. 1

*FIG. 2*

K Total Subcarriers

300

Subcarrier Set 1

1    2    3    N

→ Freq

Subcarrier Set 2

1    S+1    2S+1    K-S+1

→ Freq

2    S+2    2S+2    K-S+2

Subcarrier Set S

S    2S    3S    K

→ Freq

*FIG. 3A*

K Total Subcarriers

310

Subcarrier Set 1

1    N

→ Freq

Subcarrier Set 2

N+1    2N

→ Freq

Subcarrier Set S

K-S+1    K

→ Freq

*FIG. 3B*

FIG. 4

FIG. 5A

**FIG. 5B**

**FIG. 6**

**FIG. 7A**

One Time-Frequency Block
(not punctured by an ACK segment)

FIG. 7B

One Time-Frequency Block
(punctured by an ACK segment)

FIG. 7C

| Subcarrier | 1 | 2 | 3 | 4 | 5 | 6 | 7 | 8 | |
|---|---|---|---|---|---|---|---|---|---|
| ⋮ | ⋮ | ⋮ | ⋮ | ⋮ | ⋮ | ⋮ | ⋮ | ⋮ | |
| $k_a+8$ | $X_{u,8}$ | $X_{u,16}$ | | | | | | | ACK Segment 1 |
| $k_a+7$ | $X_{u,7}$ | $X_{u,15}$ | | | | | | | |
| $k_a+6$ | $X_{u,6}$ | $X_{u,14}$ | | | | | | | |
| $k_a+5$ | $X_{u,5}$ | $X_{u,13}$ | | | | | | | |
| $k_a+4$ | $X_{u,4}$ | $X_{u,12}$ | | | | | | | |
| $k_a+3$ | $X_{u,3}$ | $X_{u,11}$ | | | | | | | |
| $k_a+2$ | $X_{u,2}$ | $X_{u,10}$ | | | | | | | |
| $k_a+1$ | $X_{u,1}$ | $X_{u,9}$ | | | | | | | |
| ⋮ | ⋮ | ⋮ | ⋮ | ⋮ | ⋮ | ⋮ | ⋮ | ⋮ | |
| $k_b+8$ | | | | | $X_{u,8}$ | $X_{u,16}$ | | | ACK Segment 2 |
| $k_b+7$ | | | | | $X_{u,7}$ | $X_{u,15}$ | | | |
| $k_b+6$ | | | | | $X_{u,6}$ | $X_{u,14}$ | | | |
| $k_b+5$ | | | | | $X_{u,5}$ | $X_{u,13}$ | | | |
| $k_b+4$ | | | | | $X_{u,4}$ | $X_{u,12}$ | | | |
| $k_b+3$ | | | | | $X_{u,3}$ | $X_{u,11}$ | | | |
| $k_b+2$ | | | | | $X_{u,2}$ | $X_{u,10}$ | | | |
| $k_b+1$ | | | | | $X_{u,1}$ | $X_{u,9}$ | | | |
| ⋮ | ⋮ | ⋮ | ⋮ | ⋮ | ⋮ | ⋮ | ⋮ | ⋮ | |
| $k_c+8$ | | | $X_{u,8}$ | $X_{u,16}$ | | | | | ACK Segment 3 |
| $k_c+7$ | | | $X_{u,7}$ | $X_{u,15}$ | | | | | |
| $k_c+6$ | | | $X_{u,6}$ | $X_{u,14}$ | | | | | |
| $k_c+5$ | | | $X_{u,5}$ | $X_{u,13}$ | | | | | |
| $k_c+4$ | | | $X_{u,4}$ | $X_{u,12}$ | | | | | |
| $k_c+3$ | | | $X_{u,3}$ | $X_{u,11}$ | | | | | |
| $k_c+2$ | | | $X_{u,2}$ | $X_{u,10}$ | | | | | |
| $k_c+1$ | | | $X_{u,1}$ | $X_{u,9}$ | | | | | |
| ⋮ | ⋮ | ⋮ | ⋮ | ⋮ | ⋮ | ⋮ | ⋮ | ⋮ | |
| $k_d+8$ | | | | | | | $X_{u,8}$ | $X_{u,16}$ | ACK Segment 4 |
| $k_d+7$ | | | | | | | $X_{u,7}$ | $X_{u,15}$ | |
| $k_d+6$ | | | | | | | $X_{u,6}$ | $X_{u,14}$ | |
| $k_d+5$ | | | | | | | $X_{u,5}$ | $X_{u,13}$ | |
| $k_d+4$ | | | | | | | $X_{u,4}$ | $X_{u,12}$ | |
| $k_d+3$ | | | | | | | $X_{u,3}$ | $X_{u,11}$ | |
| $k_d+2$ | | | | | | | $X_{u,2}$ | $X_{u,10}$ | |
| $k_d+1$ | | | | | | | $X_{u,1}$ | $X_{u,9}$ | |
| ⋮ | ⋮ | ⋮ | ⋮ | ⋮ | ⋮ | ⋮ | ⋮ | ⋮ | |

→ Time

Symbol Period

**FIG. 8**

**FIG. 9**

EP 1 897 395 B1

*1000*

```
┌─────────────────────────────┐
│            Start            │
└─────────────────────────────┘
              │
              ▼
┌─────────────────────────────┐
│ Determine whether message   │  1012
│ acknowledged is a data      │
│ message or an assignment    │
│ message                     │
└─────────────────────────────┘
              │
              ▼
┌─────────────────────────────┐
│ Determine channel ID for    │  1014
│ acknowledgement message     │
└─────────────────────────────┘
              │
              ▼
┌─────────────────────────────┐
│ Determine time-frequency    │  1016
│ segments for a signaling    │
│ channel that punctures      │
│ traffic channels based      │
│ upon channel ID             │
└─────────────────────────────┘
              │
              ▼
┌─────────────────────────────┐
│ Generate signaling          │  1018
│ (e.g., ACK messages)        │
└─────────────────────────────┘
              │
              ▼
┌─────────────────────────────┐
│ Spread the signaling with a │  1020
│ spreading code (e.g., a     │
│ Walsh code) to obtain       │
│ spread signaling            │
└─────────────────────────────┘
              │
              ▼
┌─────────────────────────────┐
│ Map the spread signaling to │  1022
│ the time-frequency segments │
│ for the signaling channel   │
└─────────────────────────────┘
              │
              ▼
┌─────────────────────────────┐
│ Map data to time-frequency  │  1024
│ blocks for an assigned      │
│ traffic channel             │
└─────────────────────────────┘
              │
              ▼
┌─────────────────────────────┐
│ Puncture data mapped to     │  1026
│ the time-frequency segments │
│ for the signaling channel   │
└─────────────────────────────┘
              │
              ▼
┌─────────────────────────────┐
│ Generate OFDM symbols       │  1028
│ or SC-FDMA symbols for the  │
│ mapped signaling and data   │
└─────────────────────────────┘
              │
              ▼
┌─────────────────────────────┐
│             End             │
└─────────────────────────────┘
```

**FIG. 10**

*1100*

```
┌─────────────────────────────┐
│ Means for determining       │  1112
│ whether message             │
│ acknowledged is a data      │
│ message or an assignment    │
│ message                     │
└─────────────────────────────┘
              │
              ▼
┌─────────────────────────────┐
│ Means for determining       │  1114
│ channel ID for              │
│ acknowledgement message     │
└─────────────────────────────┘
              │
              ▼
┌─────────────────────────────┐
│ Means for determining       │  1116
│ time-frequency segments for │
│ a signaling channel that    │
│ punctures traffic channels  │
└─────────────────────────────┘
              │
              ▼
┌─────────────────────────────┐
│ Means for generate          │  1118
│ signaling (e.g., ACK        │
│ messages)                   │
└─────────────────────────────┘
              │
              ▼
┌─────────────────────────────┐
│ Means for spreading the     │  1120
│ signaling with a spreading  │
│ code (e.g., a Walsh code)   │
│ to obtain spread signaling  │
└─────────────────────────────┘
              │
              ▼
┌─────────────────────────────┐
│ Means for mapping the       │  1122
│ spread signaling to the     │
│ time-frequency segments for │
│ the signaling channel       │
└─────────────────────────────┘
              │
              ▼
┌─────────────────────────────┐
│ Means for mapping data to   │  1124
│ time-frequency blocks for   │
│ an assigned traffic channel │
└─────────────────────────────┘
              │
              ▼
┌─────────────────────────────┐
│ Means for puncturing data   │  1126
│ mapped to the time-         │
│ frequency segments for the  │
│ signaling channel           │
└─────────────────────────────┘
              │
              ▼
┌─────────────────────────────┐
│ Means for generating OFDM   │  1128
│ symbols or SC-FDMA symbols  │
│ for the mapped signaling    │
│ and data                    │
└─────────────────────────────┘
              │
              ▼
```

**FIG. 11**

*1200*

Start

↓ *1212*

Determine time-frequency
segments for a signaling channel
that punctures traffic channels

↓ *1214*

Extract received symbols from
the time-frequency segments
for the signaling channel

↓ *1216*

Despread the extracted received
symbols with an assigned spreading
code to obtain despread symbols

↓ *1218*

Despread the extracted received
symbols with spreading code(s)
not used for signaling to obtain
interference estimates

↓ *1220*

Perform detection on the
despread symbols (e.g., with the
interference estimates) to recover
the signaling sent by the terminal

↓ *1222*

Extract received symbols from
time-frequency blocks for a traffic
channel assigned to the terminal
and determine channel ID

↓ *1224*

Puncture received symbols
extracted from the time-frequency
segments for the signaling channel

↓ *1226*

Process the unpunctured received
symbols to obtain decoded data

↓

End

**FIG. 12**

*1300*

↓ *1312*

Means for determining time-frequency
segments for a signaling channel
that punctures traffic channels

↓ *1314*

Means for extracting received
symbols from the time-frequency
segments for the signaling channel

↓ *1316*

Means for despreading the
extracted received symbols
with an assigned spreading code
to obtain despread symbols

↓ *1318*

Means for despreading the extracted
received symbols with spreading
code(s) not used for signaling to
obtain interference estimates

↓ *1320*

Means for performing detection on
the despread symbols (e.g., with the
interference estimates) to recover
the signaling sent by the terminal

↓ *1322*

Means for extracting received symbols
from time-frequency blocks for a traffic
channel assigned to the terminal and
determining channel ID

↓ *1324*

Means for puncturing received symbols
extracted from the time-frequency
segments for the signaling channel

↓ *1326*

Means for processing the
unpunctured received symbols
to obtain decoded data

↓

**FIG. 13**

**FIG. 14**

Base Station — 110
1410 TX Data & Signaling Processor
1412 OFDM Modulator
1414 TMTR
1416
1430 Controller/Processor
1432 Memory
1424 RX Data & Signaling Processor
1422 OFDM Demod
1420 RCVR

Terminal — 120
1452
1454 RCVR
1456 OFDM Demod
1458 RX Data & Signaling Processor
1472 Memory
1470 Controller/Processor
1464 TMTR
1462 OFDM Modulator
1460 TX Data & Signaling Processor

EP 1 897 395 B1

30

**FIG. 15**

EP 1 897 395 B1

FIG. 16

EP 1 897 395 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005015941 A